# EUROPÄISCHE PATENTSCHRIFT

(11) **EP 3 733 448 B1**
(45) Veröffentlichungstag und Bekanntmachung des Hinweises auf die Patenterteilung: **06.10.2021**
(21) Anmeldenummer: 20168220.0
(22) Anmeldetag: 06.04.2020
(51) Int. Cl.: B60N 2/39

(54) **SYSTEM ZUM AUTOMATISCHEN NEIGUNGSAUSGLEICH INNERHALB EINES FAHRZEUGS**
AUTOMATIC TILT COMPENSATION SYSTEM FOR A VEHICLE
SYSTÈME DE COMPENSATION AUTOMATIQUE D'INCLINAISON À L'INTÉRIEUR D'UN VÉHICULE

(30) Priorität: 30.04.2019 DE 102019111188
(43) Veröffentlichungstag der Anmeldung: 04.11.2020
(73) Patentinhaber: GRAMMER AG, 92289 Ursensollen (DE)
(72) Erfinder: LOREY, Konstantin, 92224 Amberg (DE)
(74) Vertreter: Hannke Bittner & Partner

(56) Entgegenhaltungen:
- WO-A1-97/28981
- DE-A1- 19 501 087

## Beschreibung

Die Erfindung betrifft ein System zum automatischen Neigungsausgleich innerhalb eines Fahrzeugs gemäß dem Oberbegriff des Anspruchs 1.

Relevant ist im Rahmen der vorliegenden Erfindung insbesondere ein Neigungsausgleich, welcher aufgrund von Rotationsbewegungen, welche Fahrzeuge, beispielsweise Nutzfahrzeuge wie Traktoren, bei einer Fahrt über unebenen Untergrund um ihre Hauptachsen durchführen, notwendig wird. Diese Rotationsbewegungen werden auch als Wanken (Rotation um die Längsachse) und Nicken (Rotation um die Querachse) bezeichnet. Beispielsweise fährt das Fahrzeug mit seinem linken Vorderrad über eine Unebenheit wie einem großen Stein. Daraufhin erfährt das Fahrzeug sowohl eine Rotationsbewegung um die Längsachse als auch eine Rotationsbewegung um die Querachse. Fährt das Fahrzeug an einem Hang und parallel zu diesem, erfährt es beispielsweise lediglich eine Rotationsbewegung um die Längsachse. Für die Dauer der Hangfahrt ist somit das gesamte Fahrzeug um die Längsachse ausgelenkt. Ein Fahrzeugsitz, welcher beispielsweise starr mit der Karosserie verbunden ist, wird dementsprechend ebenfalls um die Längsachse ausgelenkt. Es versteht sich, dass diese Neigung für den Fahrer ab einem gewissen Grad und/oder einer gewissen Dauer unangenehm ist.

Es ist also sinnvoll, ein System zu entwickeln, welches eine automatische Rückstellung der Auslenkung (beispielsweise des Fahrzeugsitzes) in eine Grundposition ermöglicht. Aus dem Stand der Technik sind hierbei allerdings nur Systeme bekannt, welche die Anordnung von mehreren die Auslenkung erfassenden Sensoren vorsehen. Die Signale der Sensoren bewirken dann das Aktivieren eines Aktorsystems, welches die Rückstellung der relevanten Elemente in die Grundposition bewirkt.

Eine Baugruppe, welche einen Schwerpunkt aufweist, der höher liegt als eine Drehachse, um welche die Baugruppe eine Rotationsbewegung durchführen kann, ist bekanntermaßen instabil. Eine Rückführung der Baugruppe in die Grundposition, womit vorliegend eine Beseitigung der Auslenkung, mithin ein Neigungsausgleich gemeint ist, kann nur mit einer Rückstellkraft funktionieren.

So zeigt WO 97/28981 A1 ein System für Kleinfahrzeuge, wie Rasenmähertraktoren, zum Neigungsausgleich mit einer ersten Baugruppe und einer mittels einer Achse mit der ersten Baugruppe verbundenen zweiten Baugruppe. An der zweiten Baugruppe ist eine Pendelanordnung vorgesehen mittels welcher eine Auslenkung eines Pendels durch Kontaktelemente über einen Stromschluss detektierbar ist.

Aufgabe der vorliegenden Erfindung ist es daher, ein System zur automatischen Rückstellung der Auslenkung zu entwickeln, welches die Aktivierung des Aktorsystems rein mechanisch bewerkstelligt.

Diese Aufgabe wird gelöst gemäß den Merkmalen des Anspruches 1.

Es wird demnach ein System zum automatischen Neigungsausgleich innerhalb eines Fahrzeugs gemäß Anspruch 1 vorgeschlagen, umfassend eine erste Baugruppe und eine mittels einer ersten Achse schwenkbar mit der ersten Baugruppe verbundene zweite Baugruppe, wobei das System weiter eine Pendelanordnung umfasst, welche mittels einer oberhalb der ersten Achse und an einem oberen Ende der Pendelanordnung angeordneten zweiten Achse schwenkbar mit der zweiten Baugruppe verbunden ist, wobei eine Auslenkung der Pendelanordnung relativ zur zweiten Baugruppe detektierbar ist.

Das System funktioniert dabei bezüglich einer Auslenkung um die X-Achse, welche beispielsweise eine Längsachse des Fahrzeugs darstellt, und stellt somit einen Wankausgleich bereit. Ferner funktioniert das System auch bezüglich einer Auslenkung um die Y-Achse, welche beispielsweise eine Querachse des Fahrzeugs darstellt, und stellt somit einen Nickausgleich bereit.

Es sei erwähnt, dass das System sich auf eine Karosserie des Fahrzeugs als die erste Baugruppe sowie auf die Auslenkung eines Fahrzeugsitzes als zweite Baugruppe beziehen kann (wie im Folgenden noch näher beschrieben), allerdings ist das System nicht darauf beschränkt. Beispielsweise könnte ein Krankenwagen mit einer Karosserie (erste Baugruppe) sowie mit einer Liege oder einer Transportvorrichtung für Unfallopfer (zweite Baugruppe) ebenfalls mit einem derartigen System zum automatischen Neigungsausgleich versehen werden, um ein Unfallopfer neigungsfrei transportieren zu können.

Durch die beschriebene Anordnung ist gewährleistet, dass eine Verschwenkung der ersten Baugruppe und/oder der zweiten Baugruppe mittels der Anordnung der Pendelanordnung detektierbar ist. Eine Auslenkung der ersten Baugruppe führt gemäß dem System zu einer Auslenkung der zweiten Baugruppe und zunächst beispielsweise nicht oder auch zu einer Auslenkung der Pendelanordnung. Die Aufhängung der Pendelanordnung am oberen Ende sorgt jedoch dafür, dass diese Pendelanordnung um die zweite Achse frei schwingen kann, so dass das untere Ende der Pendelanordnung der Schwerkraft folgt und sich verhältnismäßig rasch wieder in eine Grundposition begibt, welche sie beispielsweise vor der Auslenkung innehatte. Damit ist eine einfache Möglichkeit gegeben, die Auslenkung der zweiten Baugruppe, deren momentane Position beispielsweise von der Grundposition der zweiten Baugruppe abweicht, relativ zur Pendelanordnung zu detektieren.

Da die erste Baugruppe, die zweite Baugruppe und die Pendelanordnung jeweils zueinander auslenkbar sind, wird im Sinne der vorliegenden Erfindung unterschieden zwischen einer ersten Grundposition der ersten Baugruppe, einer zweiten Grundposition der zweiten Baugruppe und einer dritten Grundposition der Pendelanordnung. Die Grundpositionen liegen jeweils dann vor, wenn das Koordinatensystem der ersten Baugruppe, der zweiten Baugruppe und/oder der Pendelanordnung jeweils identisch zum globalen Koordinatensystem angeordnet ist. Das globale Koordinatensystem ist dabei ein kartesisches Koordinatensystem mit den zueinander jeweils senkrechten Achsen X (globale Längsrichtung), Y (globale Breitenrichtung) und Z (globale Höhenrichtung), wobei im Rahmen der Erfindung die globale Höhenrichtung parallel zum Vektor der Schwerkraft angeordnet ist.

Es ist gemäß einer bevorzugten Ausführungsform vorteilhaft, wenn die erste Achse und die zweite Achse auf einer gemeinsamen Geraden, welche in einer Höhenrichtung des Fahrzeugs verlaufend angeordnet ist, liegen. Bevorzugt entspricht die Höhenrichtung des Fahrzeugs zumindest in einem nicht ausgelenkten Zustand des Fahrzeugs der globalen Höhenrichtung. Die globale Höhenrichtung ist im Rahmen der vorliegenden Erfindung dabei parallel zum Vektor der Schwerkraft angeordnet. Es sei allerdings erwähnt, dass das System auch dann funktioniert, wenn die erste Achse und die zweite Achse nicht auf dieser gemeinsamen Geraden liegen, sondern beispielsweise einen Versatz in horizontaler Richtung aufweisen.

Bevorzugt umfasst die erste Baugruppe ein Tragbalkenelement, dessen Längserstreckung in der ersten Grundposition parallel zur globalen Breitenrichtung angeordnet ist. Bevorzugt umfasst die erste Baugruppe ein Lagerelement für die erste Achse, welches starr mit dem Tragbalkenelement, bevorzugt mit dessen Oberseite, verbunden ist. Bevorzugt bilden das Tragbalkenelement und das Lagerelement zusammen eine Baugruppe, welche eine, bevorzugt genau eine Spiegelsymmetrieachse aufweist. Beispielsweise bildet die oben genannte gemeinsame Gerade diese Spiegelsymmetrieachse aus.

Es kann dabei vorteilhaft sein, wenn das System gegenüber kleineren Auslenkungen nicht empfindlich ist und somit dazu ausgebildet ist, diese zu ignorieren. Daher ist es denkbar, dass die Pendelanordnung ein Pendelelement umfasst, welches mittels eines eine Dämpfung bereitstellenden Drehlagers um die zweite Achse auslenkbar ist. Ein Dämpfungsgrad der bereitgestellten Dämpfung ist dabei durch geeignete Wahl des Drehlagers in einem gewissen Bereich frei wählbar. Der Grad der Auslenkung der Pendelanordnung, welcher auch als Amplitude bezeichnet werden kann, sei vorliegend positiv korrelierend zur Dauer der Auslenkung. Beispielsweise ist vorgesehen, dass lediglich Auslenkungen, welche länger als eine Sekunde dauern, mittels des erfindungsgemäßen Systems detektierbar sind.

Damit gewährleistet ist, dass das Pendelelement nach seiner Auslenkung durch die Auslenkung der ersten und zweiten Baugruppe möglichst schnell und/oder zuverlässig wieder in die dritte Grundposition zurückschwingen kann, ist es vorteilhaft, wenn ein entsprechend hohes Drehmoment zur Initiierung dieser Bewegung bereitgestellt wird. Somit ist es beispielsweise vorteilhaft, wenn ein Abstand zwischen einem Massenschwerpunkt des Pendelelements und einem unteren Ende der Pendelanordnung kleiner ist als ein Abstand zwischen dem Massenschwerpunkt des Pendelelements und dem oberen Ende der Pendelanordnung. Wenn vereinfacht angenommen wird, dass die gesamte Masse der Pendelanordnung im Massenschwerpunkt des Pendelelements konzentriert ist, ist der Hebelarm, der in Bezug auf eine Drehung der Pendelanordnung um die zweite Achse resultiert, umso größer, je weiter der Massenschwerpunkt von der zweiten Achse und/oder vom oberen Ende der Pendelanordnung entfernt ist. Je größer der Hebelarm, desto größer ist natürlich auch das resultierende Drehmoment. Je größer das Drehmoment, desto schneller erfolgen die Auslenkung der Pendelanordnung in Relation zur zweiten Baugruppe, die Detektion dieser Auslenkung und die Rückführung der zweiten Baugruppe in die zweite Grundposition.

Beispielsweise ist das Pendelelement in T-Form und/oder in Form eines Hammers ausgestaltet, welche oder welcher zumindest in der dritten Grundposition auf dem Kopf stehend angeordnet ist. Alternativ kann das Pendelelement zwischen dem ersten und dem zweiten Ende eine im Wesentlichen geradlinige Form aufweisen, wobei es auch hier vorteilhaft ist, wenn der Massenschwerpunkt des Pendelelements wie oben beschrieben angeordnet ist.

Um die Auslenkung der zweiten Baugruppe in Relation zur Pendelanordnung zu detektieren, wäre es beispielsweise möglich, einen Winkelsensor anzubringen. Es ist jedoch insbesondere vorgesehen, dass das erfindungsgemäße System zur Detektion der Auslenkung keine Sensoren, Aktoren und/oder keine Steuerung benötigt. Es ist insbesondere vorteilhaft, wenn mittels des Systems nur ein einzelner Grad der Auslenkung in eine erste Richtung und/oder ein einzelner Grad der Auslenkung in eine zweite Richtung detektiert werden kann. Diese Ausgestaltung ermöglicht es, das System im Gegensatz zu einem System, welches mehrere oder alle Grade der Auslenkung ermitteln kann, einfach und kostenbewusst konstruieren zu können.

Zudem kann dieser eine einzelne Grad der Auslenkung als Grenzwert angesehen werden, bis zu welchem eine Auslenkung noch toleriert wird. Erst bei Erreichen des Grenzwerts müssen Gegenmaßnahmen ergriffen werden. Gleichzeitig kann eine qualitative Aussage darüber getroffen werden, ob der Grenzwert bereits erreicht wurde oder nicht; mithin darüber, ob die Auslenkung noch größer oder gleich Null und gleichzeitig kleiner als der Grenzwert ist oder ob die Auslenkung bereits den Grenzwert erreicht hat.

Erfindungsgemäß umfasst die zweite Baugruppe mindestens ein erstes Kontaktelement zum Schließen eines Stromkreises. Erfindungsgemäß weist die Pendelanordnung an einem unteren Ende mindestens ein zweites Kontaktelement zum Schließen des Stromkreises auf. Erfindungsgemäß sind das mindestens eine erste und das mindestens eine zweite Kontaktelement in der zweiten und dritten Grundposition zueinander beabstandet und mittels der Auslenkung der Pendelanordnung relativ zur zweiten Baugruppe einander kontaktierend anordenbar. Der Stromkreis ist also zumindest dann nicht geschlossen, wenn die zweite und die dritte Grundposition gemeinsam vorliegen oder wenn die zweite Baugruppe und die Pendelanordnung eine identische Auslenkung aufweisen.

Im Sinne der vorliegenden Erfindung bildet das erste und das zweite Kontaktelement zum Schließen eines Stromkreises im kontaktierenden Zustand beispielsweise einen geschlossenen Stromkreis, werden also beide von den Ladungsträgern des Stromkreises durchflossen. Alternativ kann es vorgesehen sein, dass das erste Kontaktelement das zweite Kontaktelement kontaktiert, wobei das erste Kontaktelement als rein mechanisches Kontaktelement und/oder das zweite Kontaktelement als elektrischer Schalter, kontaktloser Schalter, Hallsensor, Magnetschalter, Reedschalter etc. ausgestaltet ist. Dabei ist "kontaktierend" so zu verstehen, dass das erste und das zweite Kontaktelement sich soweit nähern, als dass es zum Schließen des Stromkreises notwendig ist.

Es ist bevorzugt, dass mindestens zwei erste Kontaktelemente und/oder mindestens zwei zweite Kontaktelemente zum Schließen des Stromkreises angeordnet sind. Meist bevorzugt sind genau zwei erste Kontaktelemente und/oder genau zwei zweite Kontaktelemente zum Schließen des Stromkreises angeordnet. Bevorzugt ist die Anzahl der ersten Kontaktelemente identisch zur Anzahl der zweiten Kontaktelemente.

Wenn der Stromkreis also geschlossen wird und dementsprechend Strom fließt, kann dieser Stromfluss direkt detektiert werden. Indirekt kann über die Detektion des Stromflusses detektiert werden, dass die zweite Baugruppe den Grenzwert der Auslenkung erreicht hat.

Damit ein geschlossener Stromkreis ausgebildet werden kann, können Stromleitungselemente wie Stromkabel innerhalb des Systems angeordnet sein, welche ausgehend von dem ersten Kontaktelement über die Pendelanordnung bis zum zweiten Kontaktelement angeordnet sind. Alternativ kann vorgesehen sein, dass die Ladungsträger des Stromkreises zumindest abschnittsweise durch elektrisch leitende Abschnitte des Systems transportiert werden, welche nicht durch Kabel ausgebildet sind; beispielsweise wäre denkbar, dass ausgehend von den Kontaktelementen leitfähige Abschnitte durch Stromkabel, durch einen oder mehrere Abschnitte des Pendelelements und/oder durch einen oder mehrere Abschnitte der zweiten Baugruppe ausgebildet sind.

Erfindungsgemäß weist die zweite Baugruppe ein Wippenelement auf, welches um die erste Achse drehbar gelagert ist und an dessen Oberseite das mindestens eine erste Kontaktelement angeordnet ist. Dieses Wippenelement bietet eine solide Basis für weitere Elemente der zweiten Baugruppe und gleichzeitig eine einfache Möglichkeit, das mindestens eine erste Kontaktelement anzuordnen.

Ebenfalls ist es vorteilhaft, wenn die zweite Baugruppe ein erstes Balkenelement aufweist, welches senkrecht zum Wippenelement angeordnet und starr mit diesem verbunden ist, wobei an einem oberen Ende des ersten Balkenelements das Drehlager für das Pendelelement angeordnet ist. Das Balkenelement und das Wippenelement bilden bevorzugt gemeinsam die Form des Buchstabens T aus, welcher in Bezug auf die Höhenrichtung der zweiten Baugruppe auf dem Kopf stehend angeordnet ist.

Bevorzugt ist zumindest eines der Elemente der zweiten Baugruppe spiegelsymmetrisch zur gemeinsamen Geraden und/oder zu einer weiteren Geraden angeordnet. Bevorzugt sind in der ersten und zweiten Grundposition das Wippenelement und/oder das Balkenelement in sich jeweils spiegelsymmetrisch zur gemeinsamen Geraden und/oder zur weiteren Geraden ausgestaltet.

Bevorzugt sind in der ersten und zweiten Grundposition das Wippenelement und/oder das Balkenelement in sich jeweils spiegelsymmetrisch zur gemeinsamen Geraden und/oder zur weiteren Geraden ausgestaltet. Wenn genau zwei erste Kontaktelemente angeordnet sind, sind diese bevorzugt in der ersten und zweiten Grundposition in Bezug auf die gemeinsame Gerade und/oder zur weiteren Geraden spiegelsymmetrisch zueinander angeordnet. Wenn genau zwei zweite Kontaktelemente angeordnet sind, sind diese bevorzugt in der ersten und zweiten Grundposition in Bezug auf die gemeinsame Gerade und/oder zur weiteren Geraden spiegelsymmetrisch zueinander angeordnet.

Bevorzugt ist das Pendelelement und/oder die Pendelbaugruppe in sich spiegelsymmetrisch ausgestaltet. Bevorzugt ist zumindest in der dritten Grundposition die zur Spiegelsymmetrie gehörende Achse die gemeinsame Gerade und/oder die weitere Gerade.

Das Schließen des Stromkreises kann also vorteilhaft als indirekte Detektion der Auslenkung des Pendelelements dienen. Erfindungsgemäß ist innerhalb des Stromkreises mindestens ein Verbraucherelement angeordnet.

Es ist geschickt, wenn zeitgleich mit der Detektion der Auslenkung ein Ereignis eintritt, welches das Ergreifen weiterer Maßnahmen zur Beseitigung der Auslenkung unmittelbar ermöglicht. Erfindungsgemäß ist das Verbraucherelement als Aktorsystem ausgestaltet, mittels welchem die Auslenkung der Pendelanordnung relativ zur zweiten Baugruppe rückführbar ist.

Es werden im Folgenden verschiedene Varianten des Aktorsystems beschrieben. Bevorzugt umfassen alle oder mehrere diese Varianten eine Vorrichtung, um eine federnde Aufhängung des Fahrzeugsitzes bereitzustellen. Diese Vorrichtung ist beispielsweise ein rotatives Federungs-Dämpfungssystem, welches eine Rotation um die erste Achse ermöglicht bzw. abfedert und/oder abdämpft. Es kann aber auch sein, dass das System nur statisch arbeitet und/oder nicht mittels einer derartigen Vorrichtung versehen ist.

Bevorzugt umfasst das Aktorsystem eine Pumpe, beispielsweise eine Luftpumpe, welche kombiniert mit einem pneumatischen System arbeitet. Es kann auch sein, dass das Aktorsystem ein mechanisches System aufweist, welches einen Motor und ein Getriebe bereitstellt. Ferner ist eine Kombination aus einem mechanischen und einem pneumatischen System möglich.

Im Folgenden werden die Begriffe Luftfeder und Luftmuskel verwendet. Dabei beschreibt ein Luftmuskel ein Element, welches an seinen beiden Enden Vorrichtungen wie Bohrungen aufweist, mittels welcher er mit anderen Elementen besonders sicher und beispielsweise mittels einer Drehverbindung verbindbar ist. Eine Luftfeder hingegen ist beispielsweise mit anderen Elementen über eine bloße Kontaktausbildung, beispielsweise entlang einer Auflagefläche, verbunden.

Beispielsweise umfasst das Aktorsystem mindestens ein als Luftmuskel oder als Luftfeder ausgestaltetes pneumatisches Element mit einem ersten Ende und einem zweiten Ende sowie einem zwischen dem ersten und dem zweiten Ende angeordneten Luftspeicher, wobei eine Menge an Luft im Luftspeicher des pneumatischen Elements veränderbar ist.

Wenn das pneumatische Element als Luftmuskel ausgestaltet ist, ist es bevorzugt, dass das erste Ende des Luftmuskels oberhalb des zweiten Endes des Luftmuskels angeordnet und drehbar mit der ersten Baugruppe verbunden ist, und dass das zweite Ende des Luftmuskels drehbar mit der zweiten Baugruppe verbunden ist.

Wenn das pneumatische Element als Luftfeder ausgestaltet ist, ist es bevorzugt, dass das erste Ende der Luftfeder oberhalb des zweiten Endes der Luftfeder angeordnet und drehbar mit der zweiten Baugruppe verbunden ist, und wobei das zweite Ende der Luftfeder drehbar mit der ersten Baugruppe verbunden ist.

Durch Variation der Luftmenge im Luftspeicher kann der Abstand zwischen dem ersten und dem zweiten Ende des pneumatischen Elements verändert werden. Damit ändert sich auch eine Auslenkung der zweiten Baugruppe gegenüber der ersten Baugruppe.

Gemäß einer ersten bevorzugten Variante ist das zweite Ende des mindestens einen als Luftmuskel ausgestalteten pneumatischen Elements zwischen dem Wippenelement und der ersten Baugruppe oder auf gleicher Höhe des Wippenelements angeordnet. Das erste Ende des Luftmuskels ist jedoch oberhalb des Wippenelements angeordnet. Bevorzugt ist der Luftmuskel oberhalb des Wippenelements angeordnet. Bevorzugt ist der Luftmuskel oberhalb, meist bevorzugt vollständig oberhalb des Tragbalkenelements angeordnet. Gemäß der ersten bevorzugten Variante umfasst die erste Baugruppe ein Rahmenelement, welches bevorzugt starr mit dem Tragbalkenelement verbunden und/oder oberhalb von diesem angeordnet ist. Bevorzugt ist das erste Ende des Luftmuskels drehbar mit dem Rahmenelement verbunden. Bevorzugt ist das erste Ende des Luftmuskels gemäß der ersten bevorzugten Variante kontaktierend zur ersten Baugruppe und das zweite Ende des Luftmuskels kontaktierend zur zweiten Baugruppe angeordnet.

Gemäß einer zweiten bevorzugten Variante ist das mindestens eine pneumatische Element als Luftfeder ausgestaltet, welche direkt zwischen dem Wippenelement und der ersten Baugruppe angeordnet. Bevorzugt ist die Luftfeder unterhalb, meist bevorzugt vollständig unterhalb des Wippenelements angeordnet. Bevorzugt ist die Luftfeder oberhalb, meist bevorzugt vollständig oberhalb des Tragbalkenelements angeordnet. Bevorzugt sind gemäß der zweiten Variante somit das erste und das zweite Ende der Luftfeder zwischen dem Wippenelement und der ersten Baugruppe angeordnet. Außerdem ist das erste Ende der Luftfeder kontaktierend zur zweiten Baugruppe und das zweite Ende der Luftfeder kontaktierend zur ersten Baugruppe angeordnet.

Es ist bevorzugt, dass das Aktorsystem zur Rückführung der zweiten Baugruppe gemäß der ersten Variante genau einen ersten und genau einen zweiten Luftmuskel umfasst und ansonsten frei von weiteren Luftmuskeln und Luftfedern ist. Ebenfalls ist es bevorzugt, dass das Aktorsystem zur Rückführung der zweiten Baugruppe gemäß der zweiten Variante genau eine erste und genau eine zweite Luftfeder umfasst und ansonsten frei von weiteren Luftmuskeln oder Luftfedern ist.

Bevorzugt sind diese Luftmuskeln oder Luftfedern in der ersten und zweiten Grundposition in einer globalen Breitenrichtung jeweils nebeneinander angeordnet und/oder erstrecken sich hinsichtlich ihrer Ausdehnung zwischen dem ersten und dem zweiten Ende parallel zur globalen Höhenrichtung. Bevorzugt ist eine erste Luftmenge im ersten Luftmuskel oder in der ersten Luftfeder unabhängig von einer zweiten Luftmenge im zweiten Luftmuskel oder in der zweiten Luftfeder steuerbar; gleiches gilt bevorzugt auch umgekehrt. Die Rückführung der zweiten Baugruppe in die zweite Grundposition kann mit zwei Luftmuskeln oder mit zwei Luftfedern somit wesentlich schneller und gleichmäßiger erfolgen.

Alternativ oder kumulativ kann es vorgesehen sein, dass das Aktorsystem mindestens einen ersten Elektroantrieb umfasst, mittels welchem die zweite Baugruppe um die erste Achse aktiv drehbar ist. Bevorzugt ist dieser Elektroantrieb und/oder dessen Getriebeelemente direkt mit der ersten Achse verbunden. Bevorzugt ist der Elektroantrieb kontaktierend zum Tragbalkenelement der ersten Baugruppe angeordnet. Bevorzugt stellt das Tragbalkenelement der ersten Baugruppe eine Lagervorrichtung für den Elektroantrieb dar. Dies ist eine dritte bevorzugte Variante des Aktorsystems. Diese dritte Variante umfasst bevorzugt als einzige der beschriebenen Varianten keine Federungs-/Dämpfungsvorrichtung, welche das gesamte System federnd lagert; stattdessen geschieht der Winkelausgleich rein statisch.

Erfindungsgemäß umfasst das Aktorsystem mindestens einen zweiten Elektroantrieb, mittels welchem die zweite Achse aktiv drehbar ist, wobei ein zweites Balkenelement, welches in seinem Mittelpunkt mit der zweiten Achse verbunden ist, mittels mindestens zwei Federelementen mit dem Wippenelement verbunden ist. Bevorzugt ist dieser zweite Elektroantrieb und/oder dessen Getriebeelemente direkt mit der zweiten Achse verbunden. Die zweite Baugruppe wird also mittels der beschriebenen Anordnung abgefedert und/oder in die zweite Grundposition rückgeführt. Beispielsweise ist das zweite Balkenelement direkt um die zweite Achse schwenkbar gelagert oder mit dieser starr verbunden. Weiterhin ist es möglich, dass das zweite Balkenelement um eine vierte Achse, welche bevorzugt ebenfalls auf der gemeinsamen Geraden liegt, schwenkbar angeordnet ist. Beispielsweise ist die vierte Achse am zweiten Balkenelement angeordnet; somit ist das zweite Balkenelement indirekt mit der zweiten Achse verbunden.

In der Praxis hat es sich als vorteilhaft erwiesen, wenn die erste Baugruppe ein Radsystem des Fahrzeugs und die zweite Baugruppe einen Fahrzeugsitz des Fahrzeugs umfasst.

Bei einer oder mehreren oder allen der vorbeschriebenen Ausführungsformen des erfindungsgemäßen Systems ist es vorteilhaft, wenn mindestens eine erste Dämpfereinheit angeordnet ist, welche mittels eines ersten Endes mit der zweiten Baugruppe, insbesondere mit einem dritten Balkenelement, und mittels eines zweiten Endes ebenfalls mit der zweiten Baugruppe, insbesondere mit dem Wippenelement, verbunden ist. Bevorzugt ist das dritte Balkenelement um eine am ersten Balkenelement angeordnete dritte Achse schwenkbar angeordnet. Bevorzugt liegt die dritte Achse auf der gemeinsamen Geraden der ersten und zweiten Achse und ist beispielsweise mit dem ersten Balkenelement verbunden.

Diese erste Dämpfereinheit sorgt für einen Energieabbau im schwingenden System und damit für ein sanftes Rückkehren der zweiten Baugruppe zur Grundposition. Bevorzugt sind genau zwei erste Dämpfereinheiten angeordnet, welche insbesondere symmetrisch zueinander mit Bezug auf die gemeinsame Gerade der ersten und der zweiten Achse und/oder auf die weitere Gerade angeordnet sein können.

Beispielsweise umfasst die Pendelanordnung das oben erwähnte Drehlager mit Dämpfungsfunktion. Ferner kann die Pendelanordnung eine Bremse, beispielsweise eine Silikonbremse, umfassen, welche bevorzugt am oberen Ende der Pendelanordnung angeordnet ist. Ferner kann mindestens eine zweite Dämpfereinheit angeordnet sein, welche die Bewegung des Pendelelements und insbesondere dessen Bewegung zurück in die Grundposition, dämpft.

Beispielsweise ist diese zweite Dämpfereinheit senkrecht zur gemeinsamen Geraden der ersten und zweiten Achse und/oder senkrecht zur Längsrichtung/Längsachse des Pendelelements in dessen Grundposition angeordnet. Bevorzugt sind genau zwei zweite Dämpfereinheiten angeordnet, welche sich in Bezug auf die gemeinsame Gerade und/oder auf die Längsrichtung/Längsachse des Pendelelements in dessen Grundposition spiegelbildlich gegenüberliegend angeordnet sind.

Beispielsweise kann die mindestens eine zweite Dämpfereinheit in einem ersten Zustand, gemäß welchem Dämpfungsarbeit geleistet werden kann, und in einem zweiten Zustand, gemäß welchem keine Dämpfungsarbeit geleistet werden kann, vorliegen; bevorzugt gilt dies zumindest für eine Bewegungsrichtung. Beispielsweise entspricht der zweite Zustand bei einem klassischen Einrohrdämpfer dem Zustand, gemäß welchem der Kolben in den Zylinder vollständig eingefahren ist. Bevorzugt ist die mindestens eine zweite Dämpfereinheit im ersten Zustand mit jeweils einem Ende das untere Ende der Pendelanordnung kontaktierend angeordnet.

Gemäß einer besonders bevorzugten Ausführungsform der Pendelanordnung ist diese mit der Silikonbremse und/oder zwei zweiten Dämpfereinheiten ausgestaltet.

Weitere Vorteile, Ziele und Eigenschaften vorliegender Erfindung werden anhand anliegender Zeichnung und nachfolgender Beschreibung erläutert, in welchen beispielhaft Ausführungsformen des Systems dargestellt und beschrieben ist. In der Zeichnung zeigen:
- Figur 1: ein Beispiel eines erfindungsgemäßen Systems in einem ausgelenkten Zustand;
- Figur 2a: schematisch eine Ansicht eines erfindungsgemäßen Systems gemäß einer ersten bevorzugten Variante in einer Grundposition;
- Figur 2b: schematisch eine Ansicht des erfindungsgemäßen Systems gemäß Fig. 2a in einer Position, gemäß welcher die erste Baugruppe ausgelenkt ist;
- Figur 2c: schematisch eine Ansicht des erfindungsgemäßen Systems gemäß Fig. 2a in einer Position, gemäß welcher das Aktorsystem aktiviert wird;
- Figur 2d: schematisch eine Ansicht des erfindungsgemäßen Systems gemäß Fig. 2a in einer Position, gemäß welcher das Aktorsystem bereits die zweite Baugruppe in ihre Grundposition rückgeführt hat;
- Figur 2e: eine vergrößerte Ansicht eines Details der Fig. 2c;
- Fig. 3a: schematisch eine Ansicht eines erfindungsgemäßen Systems gemäß einer zweiten bevorzugten Variante in einer Grundposition;
- Fig. 3b: eine vergrößerte Ansicht der Fig. 3a;
- Fig. 4a: schematisch eine Ansicht eines erfindungsgemäßen Systems gemäß einer dritten bevorzugten Variante in einer Grundposition;
- Fig. 4b: eine vergrößerte Ansicht der Fig. 4a;
- Fig. 5a: schematisch eine Ansicht eines erfindungsgemäßen Systems gemäß einer vierten bevorzugten Variante in einer Grundposition;
- Fig. 5b: eine vergrößerte Ansicht der Fig. 5a;
- Fig. 6a-6c: verschiedene Ansichten des Systems gemäß der ersten bevorzugten Variante in der Grundposition;
- Fig. 7a-7h: verschiedene Ansichten des Systems gemäß der vierten bevorzugten Variante in der Grundposition;
- Fig. 8a-8c: verschiedene Ansichten des Systems gemäß der vierten bevorzugten Variante im ausgelenkten Zustand;
- Fig. 9a-9d: verschiedene Ansichten bevorzugter Ausführungsformen der Pendelanordnung.

Die vorliegenden Figuren beschreiben jeweils ein System S, gemäß welchem die erste Baugruppe 10 ein Radsystem 100 des Fahrzeugs V und die zweite Baugruppe 20 einen Fahrzeugsitz 200 des Fahrzeugs V umfasst.

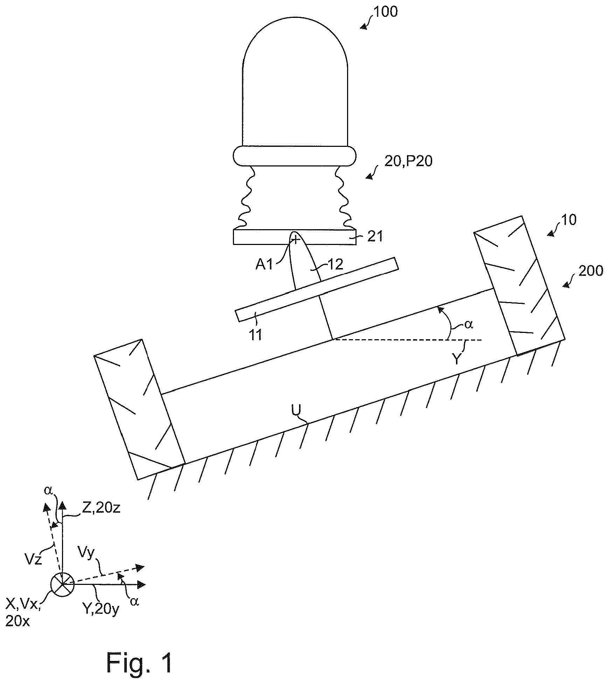

Gemäß der Fig. 1 ist vorab eine stark vereinfachte Prinzipskizze des erfindungsgemäßen Systems S zum automatischen Neigungsausgleich innerhalb eines Fahrzeugs V dargestellt. Veranschaulicht ist ein kartesisches Koordinatensystem mit den globalen Achsen X, Y und Z, wobei Z hier parallel zur Richtung der Schwerkraft angeordnet ist. Die Achsen X und Y spannen dabei eine horizontale Ebene auf, welche senkrecht zum Schwerkraftvektor (Achse Z) angeordnet sind. Es versteht sich, dass die genaue Ausrichtung der beiden Achsen X und Y im Rahmen der beschriebenen Randbedingungen frei wählbar ist.

Die zu Z und zu Y senkrechte Achse X ist vorliegend parallel zur Längsrichtung Vx des Fahrzeugs V angeordnet. Im Rahmen der vorliegenden Erfindung ist mit der Höhenrichtung Vz des Fahrzeugs V (außer der zweiten Baugruppe 20 und der Pendelanordnung 30) auch die Höhenrichtung der ersten Baugruppe 10 gemeint; gleiches gilt analog für die Breitenrichtung Vy und die Längsrichtung Vx des Fahrzeugs V in Bezug auf die Breitenrichtung und die Längsrichtung der ersten Baugruppe 10. Da das System S in sich und insbesondere die erste 10 gegen die zweite Baugruppe 20 verschwenkt werden kann, ist es sinnvoll, für die erste Baugruppe 10 und die zweite Baugruppe 20 unterschiedliche Koordinatensysteme zu wählen.

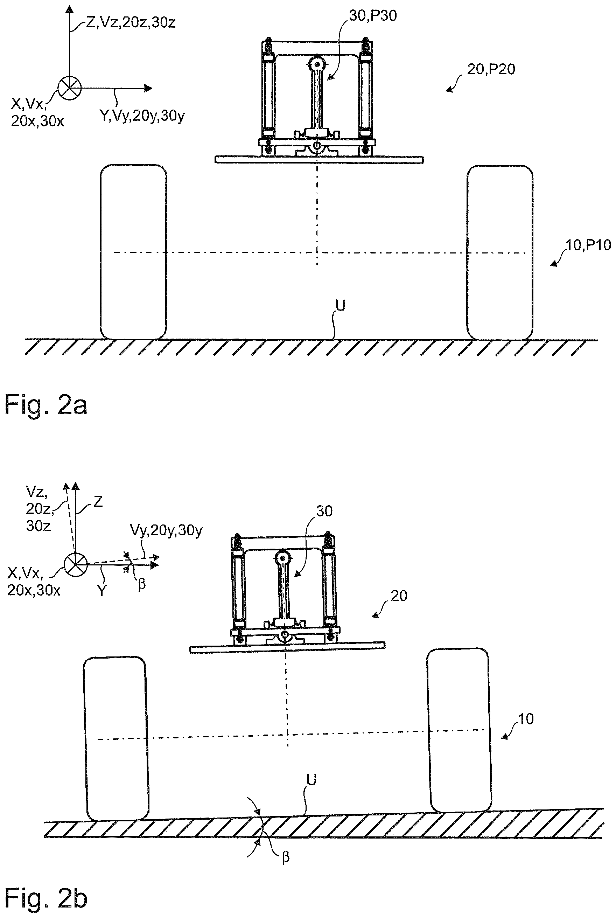

Der Untergrund U und damit auch die erste Baugruppe 10 des Fahrzeugs V weisen in Bezug auf die globale Breitenrichtung Y eine Neigung α auf. Beispielsweise fährt das Fahrzeug V parallel zu einem Hang und führt somit eine Rotationsbewegung um die Längsachse Vx aus (Wankbewegung). Die erste Baugruppe 10 ist also gegenüber ihrer Grundposition P10 (siehe Fig. 2a) um die Achse X um den Winkel α ausgelenkt.

Mit der ersten Baugruppe 10 ist eine zweite Baugruppe 20 um eine Achse A1 schwenkbar verbunden. Diese zweite Baugruppe 20 ist vorliegend bereits in ihrem zur zweiten Grundposition P20 rückgeführten Zustand gezeigt; der Neigungsausgleich hat also bereits stattgefunden, so dass sich insbesondere das gezeigte Wippenelement 21 der zweiten Baugruppe 20 bereits wieder horizontal, also innerhalb einer Ebene, welche durch die X- und die Y-Achse des globalen Koordinatensystems aufgespannt ist, ausgerichtet hat. Die Längserstreckung des Wippenelements 21 ist vorliegend parallel zur globalen Breitenrichtung Y angeordnet.

Es gilt insgesamt, dass gemäß der Fig. 1 die Längsrichtung 20x der zweiten Baugruppe 20 parallel zur globalen Längsrichtung X angeordnet ist. Ferner ist die Breitenrichtung 20y der zweiten Baugruppe 20 parallel zur globalen Breitenrichtung Y angeordnet. Außerdem ist die Höhenrichtung 20z der zweiten Baugruppe 20 parallel zur globalen Höhenrichtung Z angeordnet. Damit befindet sich die zweite Baugruppe 20 in ihrer Grundposition P20.

Die nachfolgenden Figuren beschreiben weitere Details und Ausführungsformen des erfindungsgemäßen Systems S zum automatischen Neigungsausgleich innerhalb eines Fahrzeugs V, umfassend die erste Baugruppe 10 und die mittels einer ersten Achse A1 schwenkbar mit der ersten Baugruppe 10 verbundene zweite Baugruppe 20, wobei das System S weiter eine Pendelanordnung 30 umfasst, welche mittels einer oberhalb der ersten Achse A1 und an einem oberen Ende 31 der Pendelanordnung 30 angeordneten zweiten Achse A2 schwenkbar mit der zweiten Baugruppe 20 verbunden ist, wobei eine Auslenkung der Pendelanordnung 30 relativ zur zweiten Baugruppe 20 detektierbar ist.

Die Figuren 2a bis 2d verdeutlichen dabei eine zeitliche Abfolge von Ereignissen, wie sie bei einer Fahrt parallel zu einem Hang eintreten können.

Gemäß der Fig. 2a ist zunächst das Fahrzeug V auf einem Untergrund U angeordnet, welcher parallel zur globalen Breitenrichtung Y angeordnet ist. Demzufolge sind die Koordinatensysteme des Fahrzeugs V, der ersten Baugruppe 10, der zweiten Baugruppe 20 sowie der Pendelanordnung 30 allesamt in Übereinstimmung mit dem globalen Koordinatensystem angeordnet. Es befinden sich also die erste Baugruppe 10, die zweite Baugruppe 20 sowie die Pendelanordnung 30 jeweils in der Grundposition P10, P20, P30.

Gemäß den Fig. 2b bis 2d ist das Fahrzeug V auf einem Untergrund U angeordnet, welcher unter Ausbildung eines Winkels β zur globalen Breitenrichtung Y angeordnet ist.

Demzufolge sind gemäß der Fig. 2b die Koordinatensysteme des Fahrzeugs V, der ersten Baugruppe 10, der zweiten Baugruppe 20 sowie der Pendelanordnung 30 zumindest in Bezug auf ihre Höhenrichtung Vz, 20z, 30z und ihre Breitenrichtung Vy, 20y, 30y allesamt um den Winkel β zum globalen Koordinatensystem versetzt angeordnet.

Es kann angenommen werden, dass der Dämpfungsgrad des Drehlagers 34 der zweiten Achse A2 so hoch ist, dass die Pendelanordnung 30 erst verzögert auf ihre Auslenkung reagiert. Daher ist wie oben beschrieben gemäß der Fig. 2b zu sehen, dass die Pendelanordnung 30 ebenfalls eine Auslenkung um die Längsachse 30x erfährt.

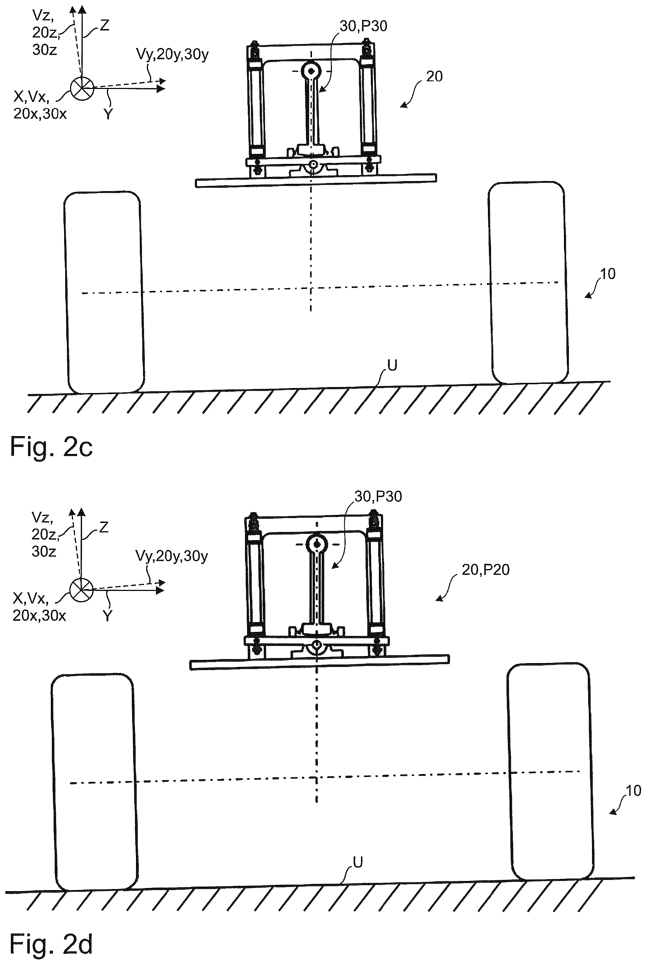

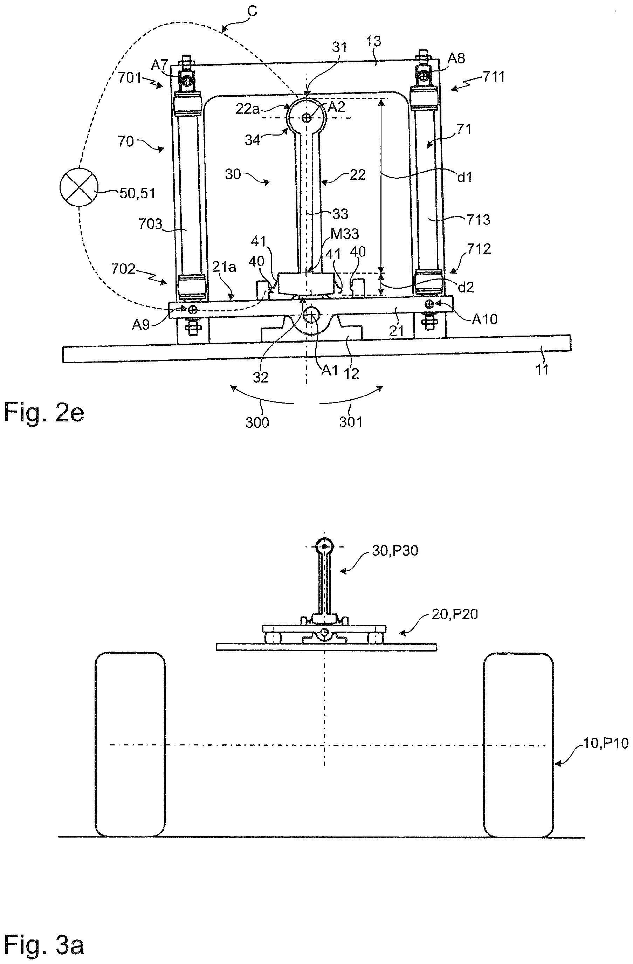

Gemäß den Fig. 2c und 2e ist zu sehen, dass die Koordinatensysteme des Fahrzeugs V, der ersten Baugruppe 10 und der zweiten Baugruppe 20 nach wie vor zumindest in Bezug auf ihre Höhenrichtung Vz, 20z und ihre Breitenrichtung Vy, 20y um den Winkel β zum globalen Koordinatensystem versetzt angeordnet sind. Dahingegen ist jedoch zu sehen, dass sich die Pendelanordnung 30 hinsichtlich ihrer Höhenachse 30z aufgrund der Wirkung der Schwerkraft auf die Pendelanordnung 30 bereits wieder parallel zur globalen Höhenrichtung Z angeordnet hat. Damit ist die Pendelanordnung 30 gegenüber der zweiten Baugruppe 20 ausgelenkt; alternativ könnte dies natürlich auch so formuliert werden, dass die zweite Baugruppe 20 gegenüber der Pendelanordnung 30 ausgelenkt ist. Eines der ersten Kontaktelemente 40 und eines der zweiten Kontaktelemente 41 bilden also zueinander Kontakt aus. Damit schließt sich ein Stromkreis C, wodurch ein als Aktorsystem 51 ausgebildeter Verbraucher 50 innerhalb des Stromkreises C aktiviert wird (siehe Fig. 2e).

Das Aktorsystem 51 führt nun die zweite Baugruppe 20 aktiv in ihre Grundposition P20 zurück. Dieser rückgeführte Zustand ist wie beschrieben vereinfacht gemäß der Fig. 1 und nochmals anhand der Fig. 2d dargestellt. Während sich also die Pendelanordnung 30 und die zweite Baugruppe 20 bereits wieder in der Grundposition P20, P30 befinden, zeigt die Fig. 2d, dass die Koordinatensysteme des Fahrzeugs V und der ersten Baugruppe 10 nach wie vor zumindest in Bezug auf ihre Höhenrichtung Vz und ihre Breitenrichtung Vy um den Winkel β zum globalen Koordinatensystem versetzt angeordnet sind.

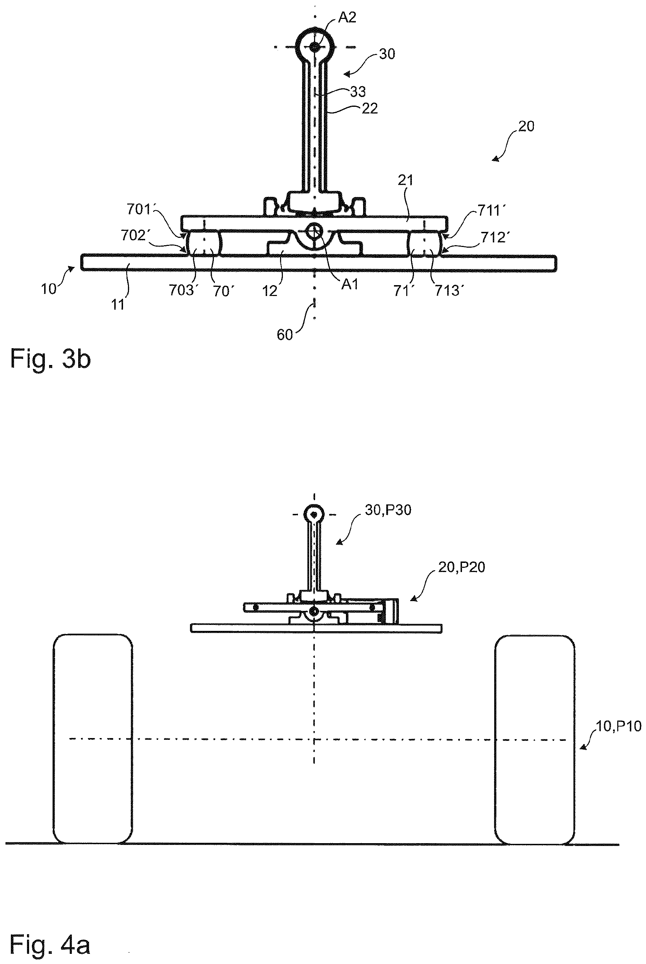

Insbesondere gemäß Fig. 3b ist gezeigt, dass vorliegend die erste Achse A1 und die zweite Achse A2 auf einer gemeinsamen Geraden 60, welche in einer Höhenrichtung Vz des Fahrzeugs V verlaufend angeordnet ist, liegen. Vorliegend entspricht die Höhenrichtung Vz des Fahrzeugs V zumindest in einem nicht ausgelenkten Zustand des Fahrzeugs V der globalen Höhenrichtung Z.

Fig. 2e zeigt, dass die erste Baugruppe 10 vorliegend ein Tragbalkenelement 11, dessen Längserstreckung in der ersten Grundposition P10 parallel zur globalen Breitenrichtung Y angeordnet ist, umfasst. Vorliegend umfasst die erste Baugruppe 10 ein Lagerelement 12 für die erste Achse A1, welches starr mit einer Oberseite des Tragbalkenelements 11 verbunden ist. Vorliegend bilden das Tragbalkenelement 11 und das Lagerelement 12 zusammen eine Baugruppe, welche genau eine Spiegelsymmetrieachse aufweist, die vorliegend durch die gemeinsame Gerade 60 ausgebildet ist.

Um ein System S bereitzustellen, welches gegenüber kleineren Auslenkungen nicht empfindlich ist und somit dazu ausgebildet ist, diese zu ignorieren, umfasst die Pendelanordnung 30 vorliegend ein Pendelelement 33, welches mittels eines eine Dämpfung bereitstellenden Drehlagers 34 um die zweite Achse A2 auslenkbar ist (siehe vor allem Fig. 2e).

Ferner ist vorliegend ein Abstand d2 zwischen einem Massenschwerpunkt M33 des Pendelelements 33 und einem unteren Ende 32 der Pendelanordnung 30 kleiner als ein Abstand d1 zwischen dem Massenschwerpunkt M33 des Pendelelements 33 und dem oberen Ende 31 der Pendelanordnung 30.

Außerdem ist das Pendelelement 33 in T-Form und in Form eines Hammers ausgestaltet, welche oder welcher zumindest in der dritten Grundposition P30 der Pendelanordnung 30 (siehe Fig. 2a) auf dem Kopf stehend angeordnet ist.

Vorliegend ist gewährleistet, dass das erfindungsgemäße System S zur Detektion der Auslenkung keine Sensoren, Aktoren und keine Steuerung benötigt. Es kann mittels des gezeigten Systems S nur ein einzelner Grad der Auslenkung in eine erste Richtung 300 und ein einzelner Grad der Auslenkung in eine zweite Richtung 301 detektiert werden.

Außerdem ist gezeigt, dass die zweite Baugruppe 20 vorliegend zwei erste Kontaktelemente 40 zum Schließen eines Stromkreises C umfasst. Ferner ist gezeigt, dass die Pendelanordnung 30 an ihrem unteren Ende 32 zwei zweite Kontaktelemente 41 zum Schließen des Stromkreises C aufweist. Vorliegend sind beide ersten 40 und beide zweiten Kontaktelemente 41 in der dritten Grundposition P30 (siehe Fig. 2a) zueinander beabstandet und mittels der Auslenkung der Pendelanordnung 30 relativ zur zweiten Baugruppe 20 einander kontaktierend anordenbar (siehe Fig. 2e). Der Stromkreis C ist also zumindest dann nicht geschlossen, wenn die zweite P20 und die dritte Grundposition P30 gemeinsam vorliegen.

Gemäß der Darstellung der Fig. 2e bildet eines der ersten 40 und eines der zweiten Kontaktelemente 41 im kontaktierenden Zustand einen geschlossenen Stromkreis C aus, werden also beide von den Ladungsträgern des Stromkreises C durchflossen.

Damit ein geschlossener Stromkreis C ausgebildet werden kann, sind vorliegend Stromkabel (nicht gezeigt) innerhalb des Systems S angeordnet, welche ausgehend von dem ersten Kontaktelement 40 über die Pendelanordnung 30 bis zum zweiten Kontaktelement 41 angeordnet sind.

Ferner ist gezeigt, dass die zweite Baugruppe 20 vorliegend ein Wippenelement 21 aufweist, welches um die erste Achse A1 drehbar gelagert ist und an dessen Oberseite 21a die beiden ersten Kontaktelemente 40 angeordnet sind.

Ebenfalls ist gezeigt, dass die zweite Baugruppe 20 vorliegend ein erstes Balkenelement 22 aufweist, welches senkrecht zum Wippenelement 21 angeordnet und starr mit diesem verbunden ist, wobei an einem oberen Ende 22a des ersten Balkenelements 22 das Drehlager 34 für das Pendelelement 33 angeordnet ist. Das erste Balkenelement 22 und das Wippenelement 21 bilden vorliegend gemeinsam die Form des Buchstabens T aus, welcher in Bezug auf die Höhenrichtung 20z der zweiten Baugruppe 20 auf dem Kopf stehend angeordnet ist.

Vorliegend sind in der ersten P10 und zweiten Grundposition P20 (siehe Fig. 2a) das Wippenelement 21 und das Balkenelement 22 in sich jeweils spiegelsymmetrisch zur gemeinsamen Geraden 60 ausgestaltet. Vorliegend sind in der ersten P10 und zweiten Grundposition P20 die beiden ersten Kontaktelemente 40 in Bezug auf die gemeinsame Gerade 60 spiegelsymmetrisch zueinander angeordnet. Vorliegend sind in der ersten P10 und zweiten Grundposition P20 die beiden zweiten Kontaktelemente 41 in Bezug auf die gemeinsame Gerade 60 spiegelsymmetrisch zueinander angeordnet.

Vorliegend ist das Pendelelement 33 und die Pendelbaugruppe 30 in sich spiegelsymmetrisch ausgestaltet. Vorliegend ist in der dritten Grundposition P30 des Pendelelements 33 die zur Spiegelsymmetrie gehörende Achse die gemeinsame Gerade 60.

Das Schließen des Stromkreises C dient also vorliegend als indirekte Detektion der Auslenkung des Pendelelements 33 gegenüber der zweiten Baugruppe 20. Gleichzeitig ist gezeigt, dass innerhalb des Stromkreises C ein Verbraucherelement 50 angeordnet ist.

Vorliegend ist das Verbraucherelement 50 als Aktorsystem 51 ausgestaltet, mittels welchem die Auslenkung der Pendelanordnung 30 relativ zur zweiten Baugruppe 20 rückführbar ist.

Gemäß einem ersten Ausführungsbeispiel bzw. einer ersten bevorzugten Variante des Systems S (siehe Figuren 2a bis 2e) umfasst das Aktorsystem 51 zwei Luftmuskeln 70, 71, jeweils mit einem ersten Ende 701, 711 und einem zweiten Ende 702, 712 sowie einem zwischen dem ersten 701, 711 und dem zweiten Ende 702, 712 angeordneten Luftspeicher 703, 713. Es ist dabei eine Menge an Luft im Luftspeicher 703, 713 des Luftmuskels 70, 71 veränderbar, wobei das erste Ende 701, 711 des Luftmuskels 70, 71 jeweils drehbar mit der ersten Baugruppe 10 und das zweite Ende 702, 712 des Luftmuskels 70, 71 jeweils drehbar mit der zweiten Baugruppe 20 verbunden ist.

Vorliegend sind die zwei Luftmuskeln 70, 71 in der ersten P10 und zweiten Grundposition P20 in der globalen Breitenrichtung Y nebeneinander angeordnet und erstrecken sich hinsichtlich ihrer Ausdehnung zwischen dem ersten 701, 711 und dem zweiten Ende 702, 712 parallel zur globalen Höhenrichtung Z. Außerdem ist eine erste Luftmenge im ersten Luftspeicher 703 des ersten Luftmuskels 70 unabhängig von einer zweiten Luftmenge im zweiten Luftspeicher 713 des zweiten Luftmuskels 71 steuerbar; gleiches gilt auch umgekehrt.

Um Wiederholungen zu vermeiden, ist die Abfolge der Schritte beim Auslenken und Rückführen der zweiten Baugruppe 20 nur anhand der ersten bevorzugten Variante (Fig. 2a-2d) gezeigt. Die zweite, dritte und vierte bevorzugte Variante des Systems S ist jeweils so gezeigt, dass sich die erste Baugruppe 10, die zweite Baugruppe 20 sowie die Pendelanordnung 30 jeweils in der Grundposition P10, P20, P30 befinden. Es versteht sich, dass sich die vier bevorzugten Varianten des Systems S bevorzugt nur anhand des verwendeten Aktorsystems 51 unterscheiden.

Gemäß einer zweiten bevorzugten Variante (siehe Figuren 3a und 3b) umfasst das Aktorsystem 51 zwei Luftfedern 70', 71', jeweils mit einem ersten Ende 701', 711' und einem zweiten Ende 702', 712' sowie einem zwischen dem ersten 701', 711' und dem zweiten Ende 702', 712' angeordneten Luftspeicher 703', 713'. Es ist dabei eine Menge an Luft im Luftspeicher 703', 713' der Luftfeder 70', 71' veränderbar, wobei das erste Ende 701', 711' der Luftfeder 70', 71' jeweils drehbar mit der zweiten Baugruppe 20 und das zweite Ende 702', 712' der Luftfeder 70', 71' jeweils drehbar mit der ersten Baugruppe 10 verbunden ist.

Vorliegend sind gemäß der ersten und der zweiten bevorzugten Variante des Systems S die zwei Luftfedern 70, 71; 70', 71' in der ersten P10 und zweiten Grundposition P20 in der globalen Breitenrichtung Y nebeneinander angeordnet und erstrecken sich hinsichtlich ihrer Ausdehnung zwischen dem ersten 701, 711; 701', 711' und dem zweiten Ende 702, 712; 702', 712' parallel zur globalen Höhenrichtung Z. Außerdem ist eine erste Luftmenge im ersten Luftspeicher 703; 703' der ersten Luftfeder 70; 70' unabhängig von einer zweiten Luftmenge im zweiten Luftspeicher 713; 713' der zweiten Luftfeder 71; 71' steuerbar; gleiches gilt auch umgekehrt.

Gemäß der ersten bevorzugten Variante ist das zweite Ende 702, 712 der Luftmuskeln 70, 71 jeweils auf gleicher Höhe des Wippenelements 21 angeordnet. Das erste Ende 701, 711 der Luftmuskeln 70, 71 ist vorliegend oberhalb des Wippenelements 21 angeordnet. Vorliegend sind beide Luftmuskeln 70, 71 vollständig oberhalb des Tragbalkenelements 11 angeordnet. Gemäß der ersten bevorzugten Variante umfasst die erste Baugruppe 10 ein Rahmenelement 13, welches starr mit dem Tragbalkenelement 11 verbunden und oberhalb von diesem angeordnet ist. Vorliegend ist das erste Ende 701, 711 der Luftmuskeln 70, 71 über Achsen A7, A8 jeweils drehbar mit dem Rahmenelement 13 verbunden. Vorliegend ist das zweite Ende 702, 712 der Luftmuskeln 70, 71 über Achsen A9, A10 jeweils drehbar mit dem Wippenelement 21 verbunden. Damit ist das erste Ende 701, 711 der Luftmuskeln 70, 71 kontaktierend zur ersten Baugruppe 10 und das zweite Ende 702, 712 der Luftmuskeln 70, 71 kontaktierend zur zweiten Baugruppe 20 angeordnet.

Gemäß der zweiten bevorzugten Variante sind beide Luftfedern 70', 71' direkt zwischen dem Wippenelement 21 und der ersten Baugruppe 10 angeordnet. Vorliegend sind beide Luftfedern 70', 71' vollständig unterhalb des Wippenelements 21 und vollständig oberhalb des Tragbalkenelements 11 angeordnet. Es sind somit das erste 701', 711' und das zweite Ende 702', 712' der Luftfedern 70', 71' zwischen dem Wippenelement 21 und der ersten Baugruppe 10 angeordnet. Außerdem ist das erste Ende 701', 711' der Luftfedern 70', 71' jeweils kontaktierend zur zweiten Baugruppe 20 und das zweite Ende 702', 712' der Luftfedern 70', 71' jeweils kontaktierend zur ersten Baugruppe 10 angeordnet.

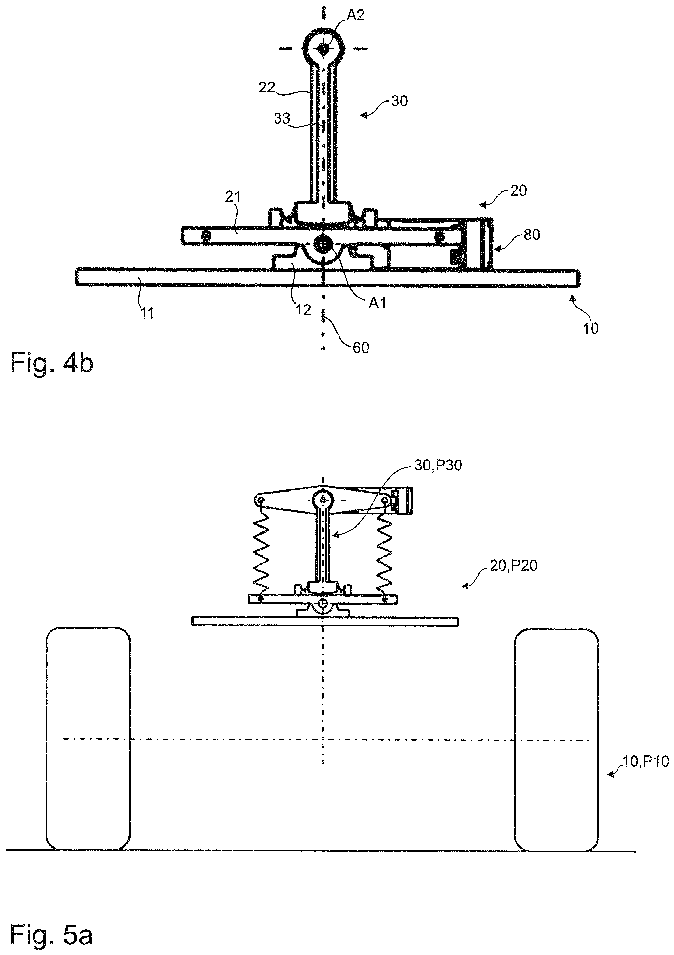

Gemäß einer dritten bevorzugten Variante (siehe Fig. 4a und 4b) ist gezeigt, dass das Aktorsystem 51 einen ersten Elektroantrieb 80 umfasst, mittels welchem die zweite Baugruppe 20 um die erste Achse A1 aktiv drehbar ist. Diese dritte Variante umfasst vorliegend keine Federungs-/Dämpfungsvorrichtung, welche das gesamte System federnd lagert. Vorliegend ist dieser Elektroantrieb 80 und dessen Getriebeelemente direkt mit der ersten Achse A1 verbunden; die erste Achse A1 sei vorliegend durch ein Wellenelement ausgestaltet, welches starr mit der zweiten Baugruppe 20 verbunden und drehbar zur ersten Baugruppe 10 angeordnet ist. Vorliegend ist der Elektroantrieb 80 kontaktierend zum Tragbalkenelement 11 der ersten Baugruppe 10 angeordnet, so dass das Tragbalkenelement 11 der ersten Baugruppe 10 eine Lagervorrichtung für den Elektroantrieb 80 darstellt.

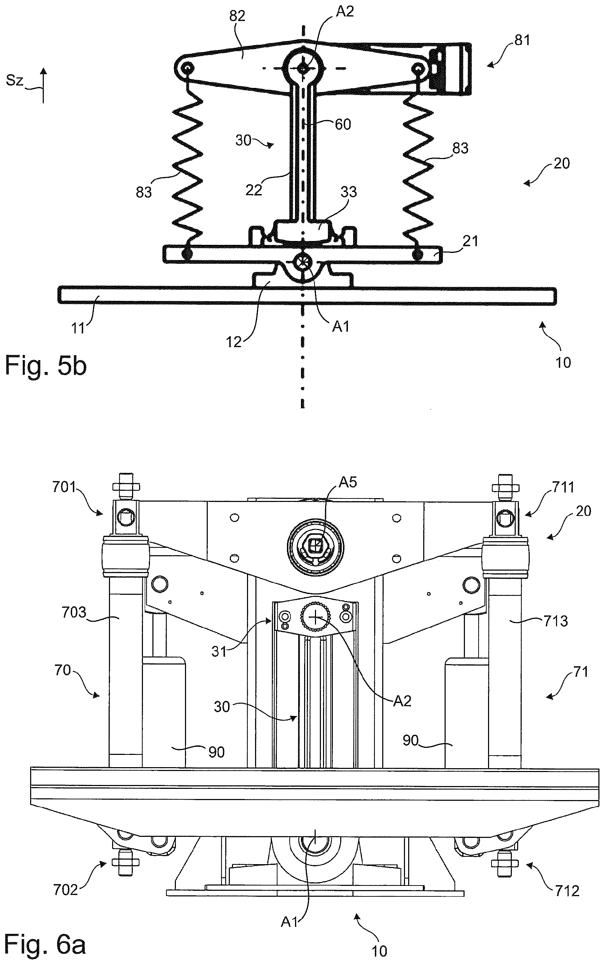

Gemäß einer vierten bevorzugten Variante (siehe Fig. 5a und 5b) ist gezeigt, dass das Aktorsystem 51 einen zweiten Elektroantrieb 81 umfasst, mittels welchem die zweite Achse A2 oder ein die zweite Achse A2 ausgestaltendes Wellenelement aktiv drehbar ist, wobei ein zweites Balkenelement 82, welches in seinem Mittelpunkt mit der zweiten Achse A2 verbunden und vorliegend direkt um die zweite Achse A2 schwenkbar angeordnet ist, mittels mindestens zwei Federelementen 83 mit dem Wippenelement 21 verbunden ist. Vorliegend ist dieser zweite Elektroantrieb 81 und dessen Getriebeelemente direkt mit der zweiten Achse A2 verbunden. Die zweite Baugruppe 20 wird also mittels der beschriebenen Anordnung abgefedert und in ihre Grundposition P20 rückgeführt.

Gemäß den Figuren 6a bis 6c ist ein System S gemäß der ersten bevorzugten Variante nochmals detailgetreuer gezeigt. Um Wiederholungen zu vermeiden, wird das erfindungsgemäße System S im Folgenden nur ausschnittsweise beschrieben.

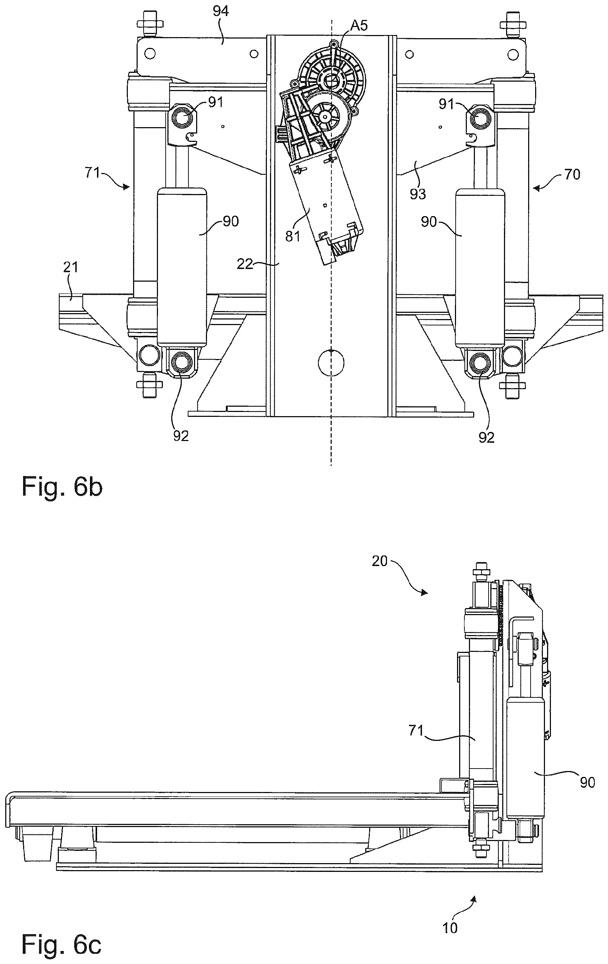

So zeigen die Figuren 6a bis 6c jeweils einen Teil der ersten Baugruppe 10 sowie die zweite Baugruppe 20, welche vorliegend ohne Fahrzeugsitz dargestellt ist. So zeigt die Figur 6a eine Vorderansicht des Systems S, die Figur 6b eine Rückansicht des Systems S und die Figur 6c eine Seitenansicht des Systems S.

Das gezeigte Aktorsystem 51 umfasst demnach genau zwei Luftmuskeln 70, 71 mit einem ersten Ende 701, 711 und einem zweiten Ende 702, 712 sowie einem zwischen dem ersten 701, 711 und dem zweiten Ende 702, 712 angeordneten Luftspeicher 703, 713. Eine Menge an Luft im Luftspeicher 703, 713 ist veränderbar. Das erste Ende 701, 711 der Luftmuskeln 70, 71 ist oberhalb des zweiten Endes 702, 712 der Luftmuskeln 70, 71 angeordnet. Außerdem ist das erste Ende der Luftmuskeln 70, 71 drehbar mit der ersten Baugruppe 10 und das zweite Ende 702, 712 der Luftmuskeln 70, 71 drehbar mit der zweiten Baugruppe 20 verbunden.

Insbesondere aus der Fig. 6a geht hervor, dass das System S die Pendelanordnung 30 umfasst, welche mittels der oberhalb der ersten Achse A1 und am oberen Ende 31 der Pendelanordnung 30 angeordneten zweiten Achse A2 schwenkbar mit der zweiten Baugruppe 20 verbunden ist.

Anhand der Fig. 6a ist gezeigt, dass auch hier das Aktorsystem 51 des Systems S einen Elektroantrieb, beispielsweise den zweiten Elektroantrieb 81 oder einen anderen, umfassen kann, mittels welchem die zweite Achse A2 aktiv drehbar ist, wobei ein viertes Balkenelement 94, welches in seinem Mittelpunkt mit der zweiten Achse A2 verbunden ist, mittels der zwei Luftmuskeln 70, 71 mit dem Wippenelement 21 verbunden ist. Vorliegend ist das vierte Balkenelement 94 um eine fünfte Achse A5, welche auf der gemeinsamen Geraden 60 liegt, schwenkbar angeordnet. Ferner ist die fünfte Achse A5 am ersten Balkenelement 22 angeordnet; somit ist das zweite Balkenelement 82 indirekt mit der zweiten Achse A2 verbunden.

Im Unterschied zur schematischen Darstellung des Systems gemäß der ersten bevorzugten Ausführungsform gemäß den Figuren 2a bis 2e zeigen insbesondere die Fig. 6a und 6b, dass genau zwei erste Dämpfereinheiten 90 angeordnet sind, welche mittels eines ersten Endes 91 mit dem dritten Balkenelement 93 der zweiten Baugruppe 20 und mittels eines zweiten Endes 92 mit dem Wippenelement 21 der zweiten Baugruppe 20 verbunden sind.

Beide erste Dämpfereinheiten 90 sind vorliegend symmetrisch zueinander mit Bezug auf die gemeinsame Gerade 60 der ersten A1 und der zweiten Achse A2 angeordnet. Vorliegend ist das dritte Balkenelement 93 um eine am ersten Balkenelement 22 angeordnete dritte Achse A3 schwenkbar angeordnet, wobei die dritte Achse A3 auf der gemeinsamen Geraden 60 der ersten A1 und zweiten Achse A3 liegt.

Die Fig. 6a zeigt, dass die Pendelanordnung 30 ein Pendelelement 33 umfasst, welches mittels eines eine Dämpfung bereitstellenden Drehlagers 34 um die zweite Achse A2 auslenkbar ist.

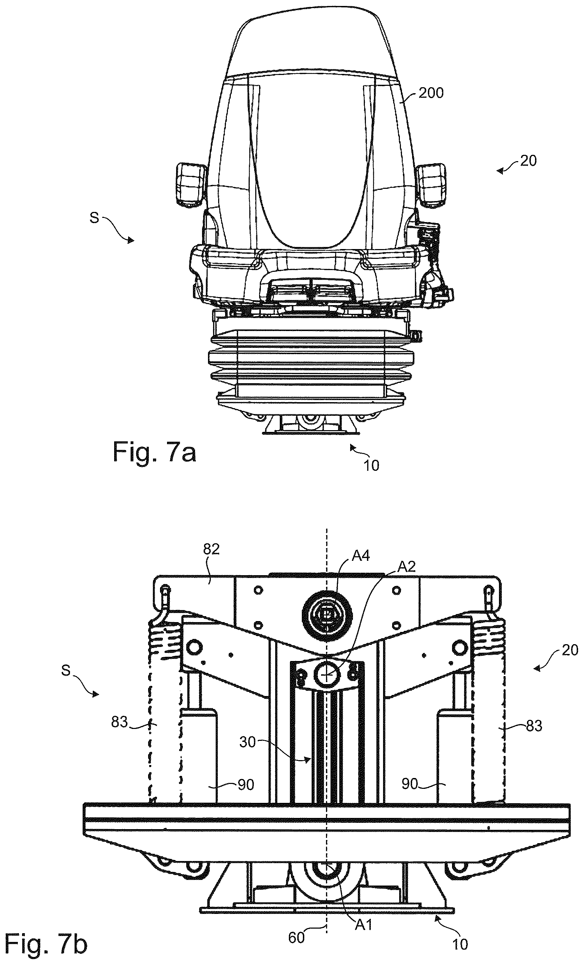

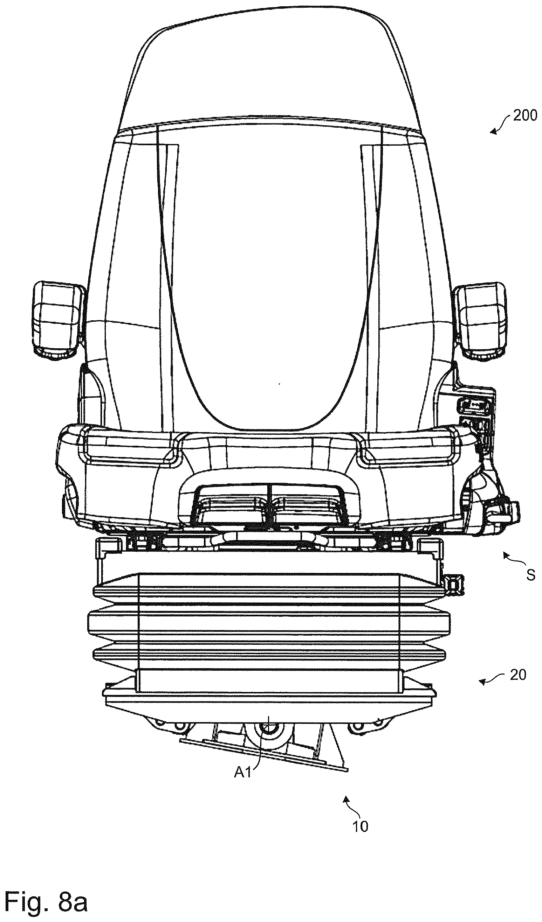

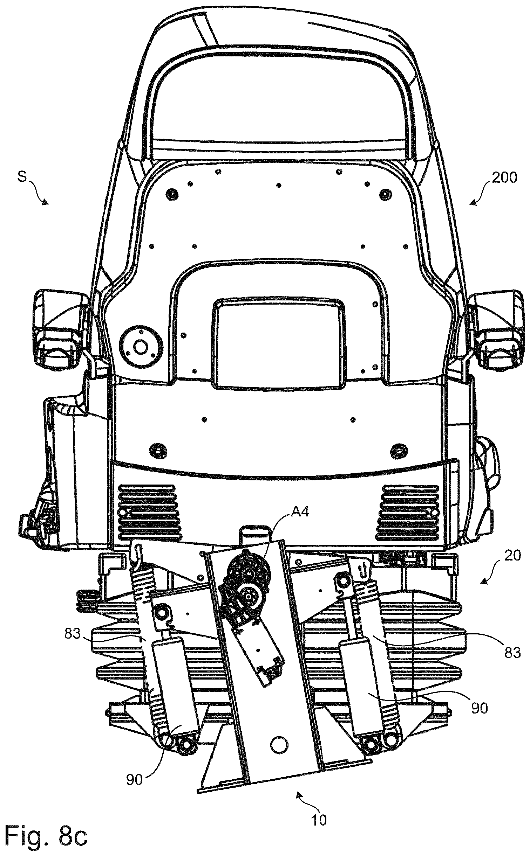

Gemäß den Figuren 7a bis 7h und 8a bis 8c ist ein System S gemäß der vierten bevorzugten Variante gezeigt. Um Wiederholungen zu vermeiden, wird das erfindungsgemäße System S im Folgenden nur ausschnittsweise beschrieben.

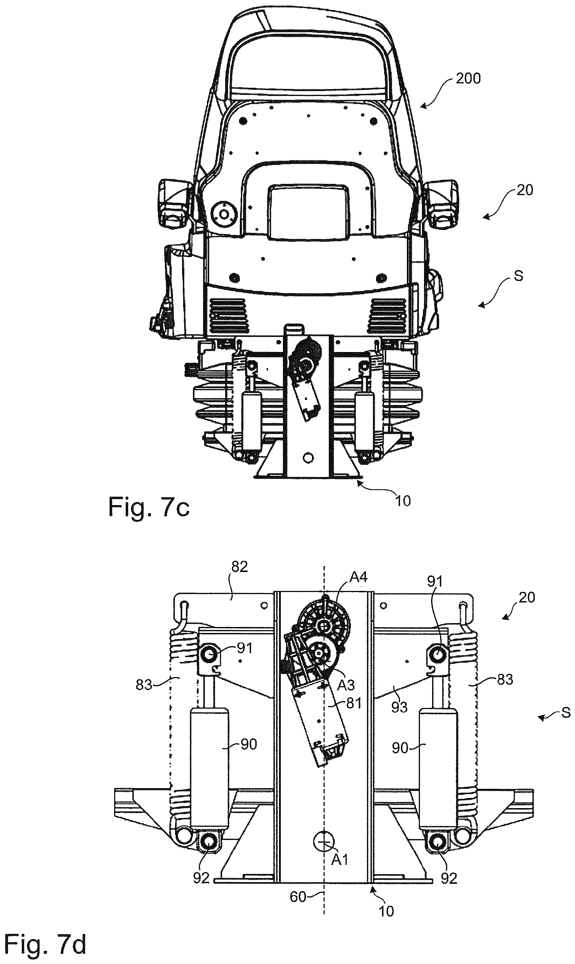

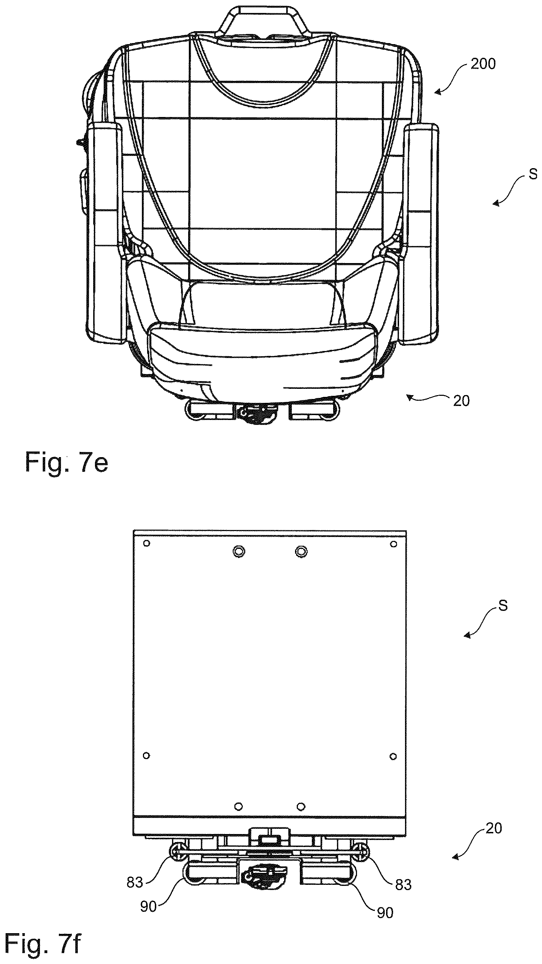

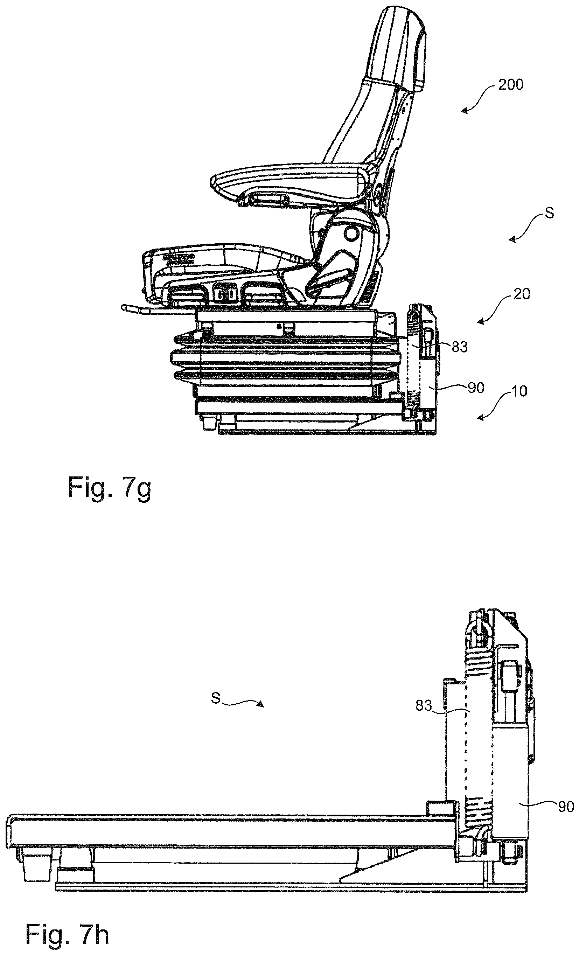

Insbesondere die Figur 7a zeigt einen Teil der ersten Baugruppe 10 sowie die zweite Baugruppe 20, welche einen Fahrzeugsitz 200 des Fahrzeugs V umfasst. Es sei darauf hingewiesen, dass zur besseren Übersichtlichkeit Teile des Systems S in manchen Figuren ganz oder teilweise weggelassen wurden. So zeigt die Figur 7a eine Ansicht des Systems S mit Fahrzeugsitz 200, während die Figur 7b die gleiche Ansicht ohne Fahrzeugsitz 200 zeigt. Gleiches gilt für die Figur 7c, welche eine Rückansicht des Systems S mit Fahrzeugsitz 200 zeigt, während die Figur 7d die gleiche Ansicht ohne Fahrzeugsitz 200 zeigt. Ebenso zeigt die Figur 7e eine Draufsicht des Systems S mit Fahrzeugsitz 200, während die Figur 7f die gleiche Ansicht ohne Fahrzeugsitz 200 zeigt. Schließlich zeigt die Figur 7g eine Seitenansicht des Systems S mit Fahrzeugsitz 200, während die Figur 7h die gleiche Ansicht ohne Fahrzeugsitz 200 zeigt.

Insbesondere aus der Fig. 7b geht hervor, dass das System S die Pendelanordnung 30 umfasst, welche mittels der oberhalb der ersten Achse A1 und am oberen Ende 31 der Pendelanordnung 30 angeordneten zweiten Achse A2 schwenkbar mit der zweiten Baugruppe 20 verbunden ist.

Anhand der Fig. 7d ist gezeigt, dass das Aktorsystem 51 des Systems S einen zweiten Elektroantrieb 81 umfasst, mittels welchem die zweite Achse A2 aktiv drehbar ist, wobei ein zweites Balkenelement 82, welches in seinem Mittelpunkt mit der zweiten Achse A2 verbunden ist, mittels mindestens zwei Federelementen 83 mit dem Wippenelement 21 verbunden ist. Vorliegend ist das zweite Balkenelement 82 um eine vierte Achse A4, welche auf der gemeinsamen Geraden 60 liegt, schwenkbar angeordnet. Ferner ist die vierte Achse A4 am ersten Balkenelement 22 angeordnet; somit ist das zweite Balkenelement 82 indirekt mit der zweiten Achse A2 verbunden.

Im Unterschied zu der schematischen Darstellung des Systems gemäß der vierten bevorzugten Ausführungsform gemäß den Figuren 5a und 5b zeigen insbesondere die Fig. 7b, 7c und 7d, dass genau zwei erste Dämpfereinheiten 90 angeordnet sind, welche mittels eines ersten Endes 91 mit einem dritten Balkenelement 93 der zweiten Baugruppe 20 und mittels eines zweiten Endes 92 mit dem Wippenelement 21 der zweiten Baugruppe 20 verbunden sind.

Beide erste Dämpfereinheiten 90 sind vorliegend symmetrisch zueinander mit Bezug auf die gemeinsame Gerade 60 der ersten A1 und der zweiten Achse A2 angeordnet. Vorliegend ist das dritte Balkenelement 93 um eine am ersten Balkenelement 22 angeordnete dritte Achse A3 schwenkbar angeordnet, wobei die dritte Achse A3 auf der gemeinsamen Geraden 60 der ersten A1 und zweiten Achse A3 liegt.

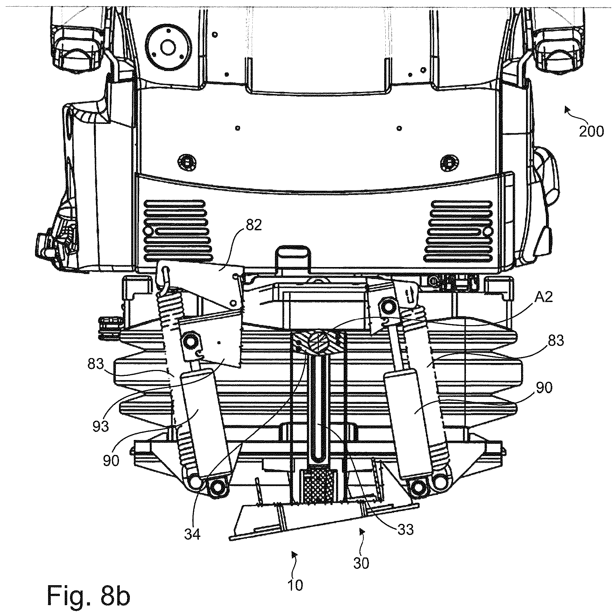

Die Fig. 8b zeigt, dass die Pendelanordnung 30 ein Pendelelement 33 umfasst, welches mittels eines eine Dämpfung bereitstellenden Drehlagers 34 um die zweite Achse A2 auslenkbar ist.

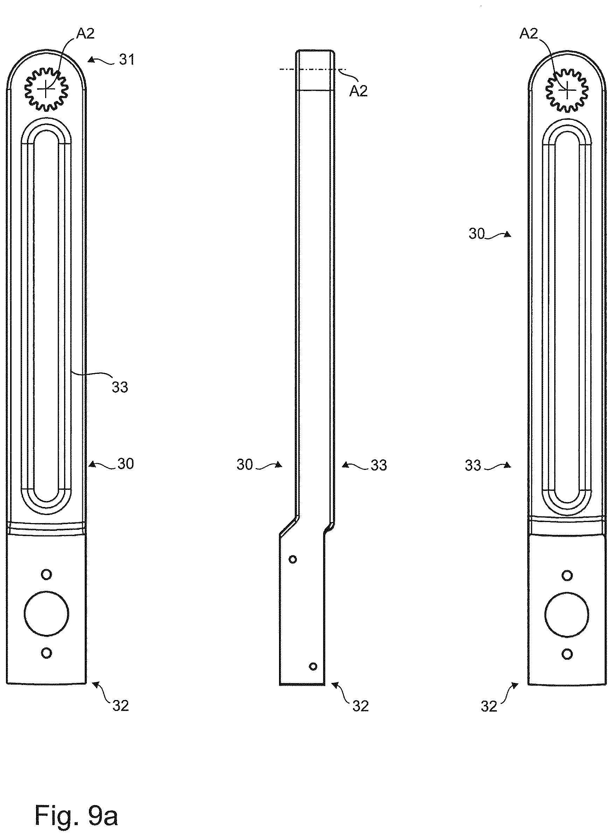

Die Figuren 9a bis 9d zeigen nun die Pendelanordnung 30 im Detail sowie verschiedene Ausführungsformen. Auch hier kann es sein, dass manche Elemente der Pendelanordnung 30 aus Gründen der Übersichtlichkeit weggelassen wurden.

Gemäß der Fig. 9a sind eine Vorderansicht, eine Seitenansicht und eine Rückansicht eines Pendelelements 33 der Pendelanordnung 30 gezeigt, welche ein oberes 31 und ein unteres Ende 32 aufweist. Ebenfalls markiert ist die Position der zweiten Achse A2.

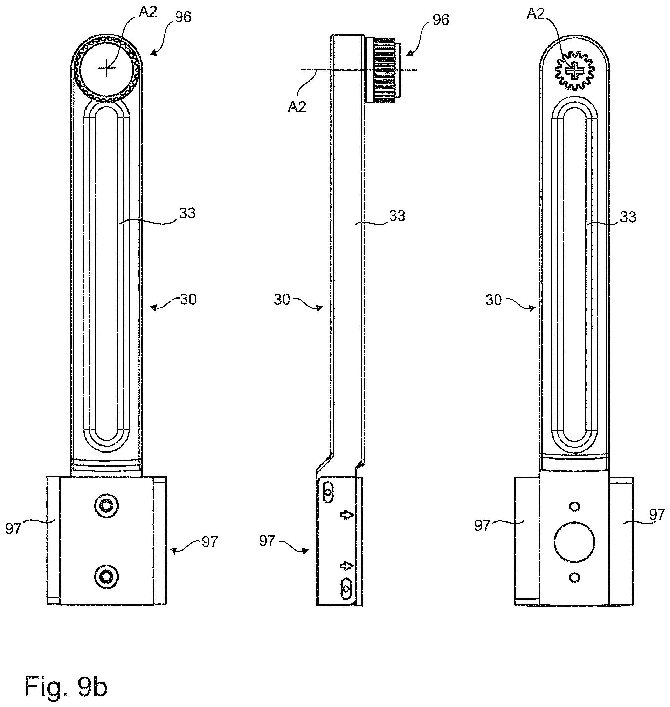

Gemäß der Fig. 9b umfasst die Pendelanordnung 30 eine Bremse, vorliegend eine Silikonbremse 96, welche vorliegend am oberen Ende 31 der Pendelanordnung 30 angeordnet ist. Ebenfalls gezeigt ist, dass die Pendelanordnung 30 an einem unteren Ende 32 zwei zweite Kontaktelemente 41 zum Schließen des Stromkreises C aufweist, wobei die zweiten Kontaktelemente 41 vorliegend als Magnetschalter 97 ausgestaltet sind.

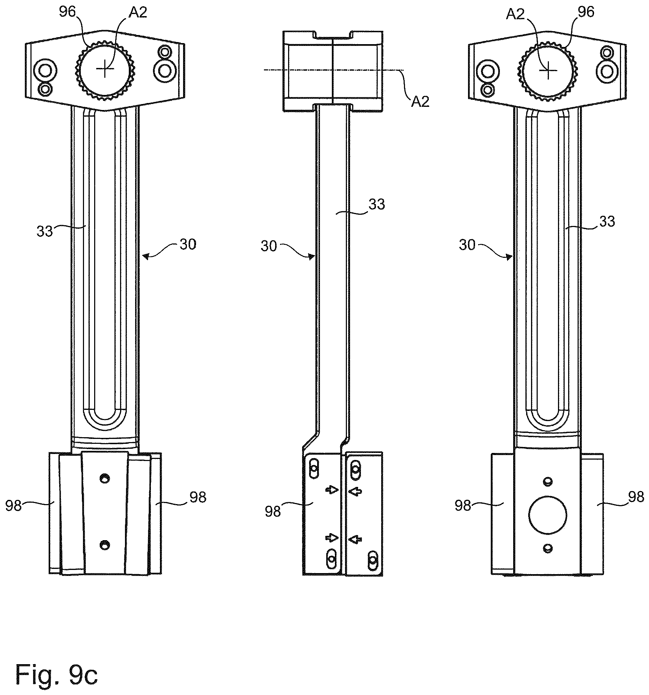

Die Fig. 9c zeigt eine Ausführungsform ähnlich zur Fig. 9b mit Silikonbremse 96 und Reedschalter 98.

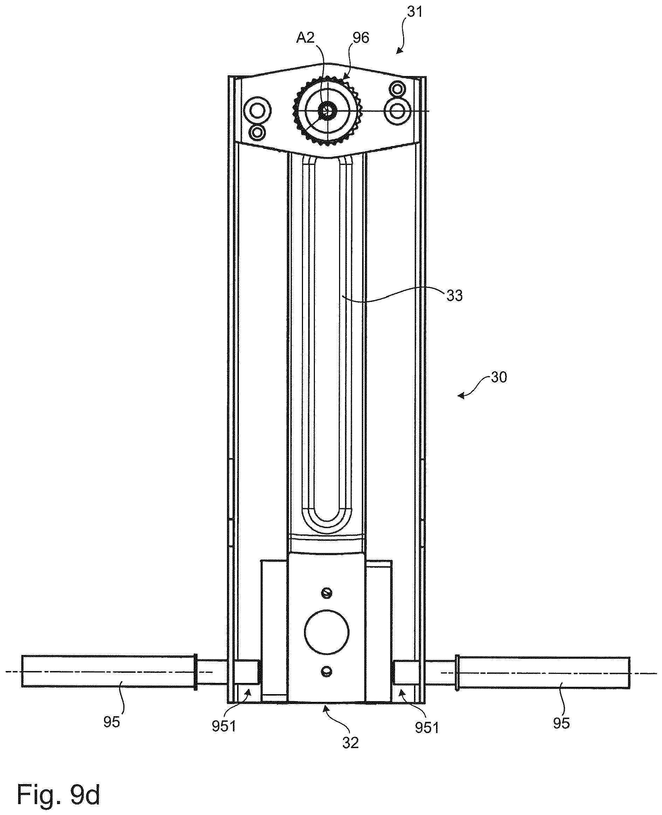

Gemäß der Fig. 9d sind zwei zweite Dämpfereinheiten 95 senkrecht zur gemeinsamen Geraden 60 der ersten A1 und zweiten Achse A2 und zur Längsrichtung/Längsachse des Pendelelements 33 in dessen Grundposition angeordnet, welche sich in Bezug auf die gemeinsame Gerade 60 und in Bezug auf die Längsrichtung/Längsachse des Pendelelements 33 in dessen Grundposition spiegelbildlich gegenüberliegend angeordnet sind. Vorliegend sind die zweiten Dämpfereinheiten 95 in einem ersten Zustand gezeigt, gemäß welchem sie mit jeweils einem Ende 951 das untere Ende 32 der Pendelanordnung 30 kontaktierend angeordnet sind. Gemäß dieser besonders bevorzugten Ausführungsform der Pendelanordnung 30 ist diese ohne Silikonbremse 96 und den zwei zweiten Dämpfereinheiten 95 ausgestaltet. Es versteht sich, dass es sich bei dem vorstehend erläuterten Ausführungsbeispiel lediglich um eine erste Ausgestaltung des erfindungsgemäßen Systems handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind und soweit sie nicht von dem durch die Ansprüche definierten Schutzbereich abweichen.

### Bezugszeichenliste

- 10, 20: Baugruppe
- 11: Tragbalkenelement
- 12: Lagerelement
- 13: Rahmenelement
- 20x, 30x, Vx, X: Längsrichtung
- 20y, 30y, Vy, Y: Breitenrichtung
- 20z, 30z, Vz, Z: Höhenrichtung
- 21: Wippenelement
- 22, 82, 93, 94: Balkenelement
- 21a: Oberseite
- 22a, 31, 32, 91, 92, 951: Ende
- 30: Pendelanordnung
- 33: Pendelelement
- 34: Drehlager
- 40, 41: Kontaktelement
- 50: Verbraucherelement
- 51: Aktorsystem
- 60: Gerade
- 70, 71: Luftmuskel
- 70', 71': Luftfeder
- 80, 81: Elektroantrieb
- 83: Federelement
- 90, 95: Dämpfereinheit
- 96: Silikonbremse
- 97: Magnetschalter
- 98: Reedschalter
- 100: Radsystem
- 200: Fahrzeugsitz
- 300, 301: Richtung
- 701, 701', 711, 711': erstes Ende
- 702, 702', 712, 712': zweites Ende
- 703, 703', 713, 713': Luftspeicher
- A1-A10: Achse
- C: Stromkreis
- d1, d2: Abstand
- M33: Massenschwerpunkt
- P10, P20, P30: Grundposition
- S: System
- V: Fahrzeug

## Patentansprüche

1. System (S) zum automatischen Neigungsausgleich innerhalb eines Fahrzeugs (V),
umfassend eine erste Baugruppe (10) und eine mittels einer ersten Achse (A1) schwenkbar mit der ersten Baugruppe (10) verbundene zweite Baugruppe (20),
wobei das System (S) weiter eine Pendelanordnung (30) umfasst, welche mittels einer oberhalb der ersten Achse (A1) und an einem oberen Ende (31) der Pendelanordnung (30) angeordneten zweiten Achse (A2) schwenkbar mit der zweiten Baugruppe (20) verbunden ist, wobei eine Auslenkung der Pendelanordnung (30) relativ zur zweiten Baugruppe (20) detektierbar ist,
wobei die zweite Baugruppe (20) mindestens ein erstes Kontaktelement (40) zum Schließen eines Stromkreises (C) umfasst,
wobei die Pendelanordnung (30) an einem unteren Ende (32) mindestens ein zweites Kontaktelement (41) zum Schließen des Stromkreises (C) aufweist,
wobei das mindestens eine erste (40) und das mindestens eine zweite Kontaktelement (41) in einer Grundposition (P30) der Pendelanordnung (30) zueinander beabstandet und mittels der Auslenkung der Pendelanordnung (30) relativ zur zweiten Baugruppe (20) einander kontaktierend anordenbar sind, wobei die zweite Baugruppe (20) ein Wippenelement (21) aufweist, welches um die erste Achse (A1) drehbar gelagert ist und an dessen Oberseite (21a) das mindestens eine erste Kontaktelement (40) angeordnet ist
**dadurch gekennzeichnet, dass**
innerhalb des Stromkreises (C) mindestens ein als Aktorsystem (51) ausgestaltetes Verbraucherelement (50) angeordnet ist, mittels welchem die Auslenkung der Pendelanordnung (30) relativ zur zweiten Baugruppe (20) umkehrbar ist und wobei das Aktorsystem (51) mindestens einen zweiten Elektroantrieb (81) umfasst, mittels welchem die zweite Achse (A2) aktiv drehbar ist, wobei ein zweites Balkenelement (82), welches in seinem Mittelpunkt mit der zweiten Achse (A2) verbunden ist, mittels mindestens zwei Federelementen (83) mit dem Wippenelement (21) verbunden ist.

2. System (S) nach einem der vorhergehenden Ansprüche,
**dadurch gekennzeichnet, dass**
die Pendelanordnung (30) ein Pendelelement (33) umfasst, welches mittels eines eine Dämpfung bereitstellenden Drehlagers (34) um die zweite Achse (A2) auslenkbar ist.

3. System (S) nach Anspruch 2,
**dadurch gekennzeichnet, dass**
ein Abstand zwischen einem Massenschwerpunkt (M33) des Pendelelements (33) und einem unteren Ende (32) der Pendelanordnung (30) kleiner ist als ein Abstand zwischen dem Massenschwerpunkt (M33) des Pendelelements (33) und dem oberen Ende (31) der Pendelanordnung (30).

4. System (S) nach Anspruch 1, **dadurch gekennzeichnet, dass**
die zweite Baugruppe (20) ein erstes Balkenelement (22) aufweist, welches senkrecht zum Wippenelement (21) angeordnet und starr mit diesem verbunden ist, wobei an einem oberen Ende (22a) des ersten Balkenelements (22) das Drehlager (34) für das Pendelelement (33) angeordnet ist.

5. System (S) nach einem der vorhergehenden Ansprüche, **dadurch gekennzeichnet, dass**
das Aktorsystem (51) mindestens ein als Luftmuskel (70, 71) oder als Luftfeder (70', 71') ausgestaltetes pneumatisches Element mit einem ersten Ende (701, 711; 701', 711') und einem zweiten Ende (702, 712; 702', 712') sowie einem zwischen dem ersten (701, 711; 701', 711') und dem zweiten Ende (702, 712; 702', 712') angeordneten Luftspeicher (703, 713; 703', 713') umfasst, wobei eine Menge an Luft im Luftspeicher (703, 713; 703', 713') des pneumatischen Elements veränderbar ist,
wobei das erste Ende (701, 711) des Luftmuskels (70, 71) oberhalb des zweiten Endes (702, 712) des Luftmuskels (70, 71) angeordnet und drehbar mit der ersten Baugruppe (10) verbunden ist, und wobei das zweite Ende (702, 712) des Luftmuskels (70, 71) drehbar mit der zweiten Baugruppe (20) verbunden ist, oder
wobei das erste Ende (701', 711') der Luftfeder (70', 71') oberhalb des zweiten Endes (702', 712') der Luftfeder (70', 71') angeordnet und drehbar mit der zweiten Baugruppe (20) verbunden ist, und wobei das zweite Ende (702', 712') der Luftfeder (70', 71') drehbar mit der ersten Baugruppe (10) verbunden ist.

6. System (S) nach einem der Ansprüche 1 bis 4 oder 5, **dadurch gekennzeichnet, dass**
das Aktorsystem (51) mindestens einen ersten Elektroantrieb (80) umfasst, mittels welchem die zweite Baugruppe (20) um die erste Achse (A1) aktiv drehbar ist.

7. System (S) nach einem der vorhergehenden Ansprüche, **dadurch gekennzeichnet, dass**
die erste Baugruppe (10) ein Radsystem (100) des Fahrzeugs (V) und die zweite Baugruppe (20) einen Fahrzeugsitz (200) des Fahrzeugs (V) umfasst.

## Claims

1. System (S) for automatic tilt compensation within a vehicle (V), comprising a first assembly (10) and a second assembly (20) which is pivotally connected to the first assembly (10) by means of a first axis (A1), wherein the system (S) further comprises a pendulum arrangement (30) which is pivotally connected to the second assembly (20) by means of a second axis (A2) arranged above the first axis (A1) and at an upper end (31) of the pendulum arrangement (30), wherein a deflection of the pendulum arrangement (30) relative to the second assembly (20) can be detected, wherein the second assembly (20) comprises at least one first contact element (40) for closing a circuit (C),
wherein the pendulum arrangement (30) has at least one second contact element (41) for closing the circuit (C) at a lower end (32), wherein the at least one first (40) and the at least one second contact element (41) are spaced apart from one another in an initial position (P30) of the pendulum arrangement (30) and can be arranged in contact with one another by means of the deflection of the pendulum arrangement (30) relative to the second assembly (20), wherein the second assembly (20) has a rocker element (21) which is rotatably mounted about the first axis (A1) and on the upper side (21a) of which the at least one first contact element (40) is arranged, **characterised in that**
at least one consumer element (50), which is configured as an actuator system (51), by means of which the deflection of the pendulum arrangement (30) can be reversed relative to the second assembly (20), is arranged within the circuit (C), and wherein the actuator system (51) comprises at least one second electric drive (81), by means of which the second axis (A2) can be actively rotated, wherein a second bar element (82), which is connected at its centre to the second axis (A2), is connected to the rocker element (21) by means of at least two spring elements (83).

2. System (S) according to any of the preceding claims,
**characterised in that**
the pendulum arrangement (30) comprises a pendulum element (33) which can be deflected about the second axis (A2) by means of a pivot bearing (34) providing damping.

3. System (S) according to claim 2,
**characterised in that**
a distance between a centre of mass (M33) of the pendulum element (33) and a lower end (32) of the pendulum arrangement (30) is smaller than a distance between the centre of mass (M33) of the pendulum element (33) and the upper end (31) of the pendulum arrangement (30).

4. System (S) according to claim 1,
**characterised in that**
the second assembly (20) has a first bar element (22) which is arranged perpendicular to the rocker element (21) and is rigidly connected thereto, wherein the pivot bearing (34) for the pendulum element (33) is arranged at an upper end (22a) of the first bar element (22).

5. System (S) according to any of the preceding claims,
**characterised in that**
the actuator system (51) comprises at least one pneumatic element configured as an air muscle (70, 71) or as an air spring (70', 71') having a first end (701, 711; 701', 711') and a second end (702, 712; 702', 712') and an air reservoir (703, 713; 703', 713') arranged between the first (701, 711; 701', 711') and the second end (702, 712; 702', 712'), wherein a quantity of air in the air reservoir (703, 713; 703', 713') of the pneumatic element can be changed,
wherein the first end (701, 711) of the air muscle (70, 71) is arranged above the second end (702, 712) of the air muscle (70, 71) and is rotatably connected to the first assembly (10), and wherein the second end (702, 712) of the air muscle (70, 71) is rotatably connected to the second assembly (20), or
wherein the first end (701', 711') of the air spring (70', 71') is arranged above the second end (702', 712') of the air spring (70', 71') and is rotatably connected to the second assembly (20), and wherein the second end (702', 712') of the air spring (70', 71') is rotatably connected to the first assembly (10).

6. System (S) according to either claim 1 to 4 or 5,
**characterised in that**
the actuator system (51) comprises at least one first electric drive (80), by means of which the second assembly (20) can be actively rotated about the first axis (A1).

7. System (S) according to any of the preceding claims,
**characterised in that**
the first assembly (10) comprises a wheel system (100) of the vehicle (V) and the second assembly (20) comprises a vehicle seat (200) of the vehicle (V).

## Revendications

1. Système (S) de compensation automatique d'inclinaison à l'intérieur d'un véhicule (V), comportant un premier ensemble (10) et un second ensemble (20) relié de manière pivotante au premier ensemble (10) au moyen d'un premier axe (A1),
le système (S) comportant en outre un agencement pendulaire (30), lequel est relié de manière pivotante au second ensemble (20) au moyen d'un second axe (A2) disposé au-dessus du premier axe (A1) et à une extrémité supérieure (31) de l'agencement pendulaire (30), une déviation de l'agencement pendulaire (30) par rapport au second ensemble (20) est détectable.
le second ensemble (20) comportant au moins un premier élément de contact (40) pour la fermeture d'un circuit (C),
l'agencement pendulaire (30) à une extrémité inférieure (32) présentant au moins un second élément de contact (41) pour la fermeture du circuit (C),
ledit au moins un premier (40) et ledit au moins un second élément de contact (41) étant espacés l'un de l'autre dans une position de base (P30) de l'agencement pendulaire (30) et pouvant être disposés de manière à entrer en contact l'un avec l'autre au moyen de la déviation de l'agencement pendulaire (30) par rapport au second ensemble (20),
le second ensemble (20) présentant un élément bascule (21), lequel est monté rotatif autour du premier axe (A1) et sur la face supérieure (21a) est disposé ledit au moins un premier élément de contact (40),
**caractérisé par le fait qu'**
à l'intérieur du circuit (C), est disposé au moins un élément consommateur (50) configuré comme système d'actionnement (51), au moyen duquel la déviation de l'agencement pendulaire (30) par rapport au second ensemble (20) est inversable, et où le système d'actionnement (51) comporte au moins un second entraînement électrique (81), au moyen duquel le second axe (A2) est apte à tourner activement, un second élément barre (82), lequel est relié en son centre au second axe (A2), étant relié à l'élément bascule (21) au moyen d'au moins deux éléments ressorts (83).

2. Système (S) selon la revendication précédente,
**caractérisé par le fait que**
l'agencement pendulaire (30) comporte un élément pendulaire (33), lequel est apte à être dévié autour du second axe (A2) au moyen d'un palier rotatif (34) fournissant un amortissement.

3. Système (S) selon la revendication 2,
**caractérisé par le fait qu'**
une distance entre un centre de gravité (M33) de l'élément pendulaire (33) et une extrémité inférieure (32) de l'agencement pendulaire (30) est inférieure à une distance entre le centre de gravité (M33) de l'élément pendulaire (33) et l'extrémité supérieure (31) de l'agencement pendulaire (30).

4. Système (S) selon la revendication 1,
**caractérisé par le fait que**
le second ensemble (20) présente un premier élément barre (22), lequel est disposé perpendiculairement à l'élément bascule (21) et relié rigidement à celui-ci, le palier rotatif (34) pour l'élément pendulaire (33) étant disposé à une extrémité supérieure (22a) du premier élément barre (22).

5. Système (S) selon l'une des revendications précédentes,
**caractérisé par le fait que**
le système d'actionnement (51) comporte au moins un élément pneumatique configuré en tant que muscle pneumatique (70, 71) ou en tant que ressort pneumatique (70', 71'), ayant une première extrémité (701, 711 ; 701', 711') et une seconde extrémité (702, 712 ; 702', 712') ainsi qu'un réservoir d'air (703, 713 ; 703', 713') disposé entre la première (701, 711 ; 701', 711') et la seconde extrémité (702, 712 ; 702', 712'), une quantité d'air dans le réservoir d'air (703, 713 ; 703', 713') de l'élément pneumatique étant modifiable,
la première extrémité (701, 711) du muscle pneumatique (70, 71) étant disposée au-dessus de la seconde extrémité (702, 712) du muscle pneumatique (70, 71) et reliée de manière rotative au premier ensemble (10), et la seconde extrémité (702, 712) du muscle pneumatique (70, 71) étant reliée de manière rotative au second ensemble (20), ou la première extrémité (701', 711') du ressort pneumatique (70', 71') étant disposée au-dessus de la seconde extrémité (702', 712') du ressort pneumatique (70', 71') et reliée de manière rotative au second ensemble (20), et la seconde extrémité (702', 712') du ressort pneumatique (70', 71') étant reliée de manière rotative au premier ensemble (10).

6. Système (S) selon l'une des revendications 1 à 4 ou 5,
**caractérisé par le fait que**
le système d'actionnement (51) comporte au moins un premier entraînement électrique (80) au moyen duquel le second ensemble (20) est apte à tourner activement autour du premier axe (A1).

7. Système (S) selon l'une des revendications précédentes,
**caractérisé par le fait que**
le premier ensemble (10) comporte un système de roues (100) du véhicule (V) et le second ensemble (20) comporte un siège de véhicule (200) du véhicule (V).
